# EUROPEAN PATENT SPECIFICATION

(11) **EP 2 693 684 B1**
(45) Date of publication and mention of the grant of the patent: **07.11.2018**
(21) Application number: 12765375.6
(22) Date of filing: 20.02.2012
(51) Int. Cl.: H04L 9/06, G09C 1/00, H04L 9/00

(54) **ENCRYPTION PROCESSING DEVICE, ENCRYPTION PROCESSING METHOD, AND PROGRAMME**
VERSCHLÜSSELUNGSVERARBEITUNGSVORRICHTUNG, VERSCHLÜSSELUNGSVERARBEITUNGSVERFAHREN UND PROGRAMM DAFÜR
DISPOSITIF DE TRAITEMENT DE CHIFFREMENT, PROCÉDÉ DE TRAITEMENT DE CHIFFREMENT, ET PROGRAMME

(30) Priority: 28.03.2011 JP 2011069185; 22.09.2011 JP 2011207705
(43) Date of publication of application: 05.02.2014
(73) Proprietor: Sony Corporation, Tokyo 108-0075 (JP)
(72) Inventor: SHIBUTANI, Kyoji, Tokyo 108-0075 (JP); MITSUDA, Atsushi, Tokyo 108-0075 (JP); AKISHITA, Toru, Tokyo 108-0075 (JP); ISOBE, Takanori, Tokyo 108-0075 (JP); SHIRAI, Taizo, Tokyo 108-0075 (JP); HIWATARI, Harunaga, Tokyo 108-0075 (JP)
(74) Representative: D Young & Co LLP
(86) International application number: PCT/JP2012/053933
(87) International publication number: WO 2012/132623

(56) References cited:
- Kazumaro Aoki ET AL: "Speciication of Camellia - a 128-bit Block Cipher", , 26 September 2001 (2001-09-26), XP055167244, Retrieved from the Internet: URL:http://www.cryptrec.go.jp/cryptrec_03_ spec_cypherlist_files/PDF/06_01espec.pdf [retrieved on 2015-02-04]
- Lawrie Brown ET AL: "Introducing the new LOKI97 Block Cipher", , 12 June 1998 (1998-06-12), XP055168204, Retrieved from the Internet: URL:http://citeseerx.ist.psu.edu/viewdoc/d ownload;jsessionid=C2B792B35E02A510DB42AE5 3F0EF82B4?doi=10.1.1.26.6958&rep=rep1&type =pdf [retrieved on 2015-02-09]
- RIVEST R L ET AL: "The RC6 Block Cipher", FIRST ADVANCED ENCRYPTION STANDARD (AES) CONFERENCE, , 20 August 1998 (1998-08-20), pages 1-21, XP002543314, Retrieved from the Internet: URL:http://people.csail.mit.edu/rivest/Rc6 .pdf [retrieved on 2009-08-27]
- "Universal Mobile Telecommunications System (UMTS); LTE; Specification of the 3GPP confidentiality and integrity algorithms; Document 2: Kasumi specification (3GPP TS 35.202 version 9.0.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V9.0.0, 1 February 2010 (2010-02-01), XP014045969,
- MERKLE RALPH C ED - KOVALEV MIKHAIL M KOVALEVSIGMAIRRIX COM SIRRIX AG IM STADTWALD D3 2 66123 SAARBRÜCKEN GERMANY ET AL LI XUE XU: "Fast Software Encryption Functions", 1 January 1901 (1901-01-01), LECTURE NOTES IN COMPUTER SCIENCE; [LECTURE NOTES IN COMPUTER SCIENCE], SPRINGER VERLAG, DE, PAGE(S) 477 - 501, XP047288201, ISSN: 0302-9743 ISBN: 978-3-319-10553-6 [retrieved on 2001-05-18] * section Khafre, pages 488-490 *
- PANASAYYA YALLA ET AL: "Compact FPGA implementation of Camellia", FIELD PROGRAMMABLE LOGIC AND APPLICATIONS, 2009. FPL 2009. INTERNATIONAL CONFERENCE ON, IEEE, PISCATAWAY, NJ, USA, 31 August 2009 (2009-08-31), pages 658-661, XP031534082, ISBN: 978-1-4244-3892-1
- KO, Y. ET AL.: 'Related Key Differential Attacks on 27 Rounds of XTEA and Full-Round GOST' LECTURE NOTES IN COMPUTER SCIENCE vol. 3017, 28 July 2004, pages 299 - 316, XP019007570
- SHIBUTANI, K. ET AL.: 'Piccolo: An Ultra- Lightweight Blockcipher' LECTURE NOTES IN COMPUTER SCIENCE vol. 6917, 27 September 2011, pages 342 - 357, XP019166866

## Description

### Technical Field

The present disclosure relates to an encryption processing device, an encryption processing method, and a program. More specifically, this relates to an encryption processing device, an encryption processing method, and a program for executing shared key encryption.

### Background Art

As the information society continues to develop, the necessity of information security technologies for securely protecting information used increases. One configuration element of information security technologies are encryption technologies, and encryption technologies are currently used by various products and systems.

Though there are various types of encryption processing algorithms, one of the basic technologies is called a shared key block encryption. According to the shared key block encryption, a key for encryption and a key for decryption are shared items. In both the encryption processing and the decryption processing, multiple keys are generated from these shared keys, and a data conversion processing is repeatedly executed in block data units of a certain block unit such as 64 bits, 128 bits, 256 bits, or other.

DES (Data Encryption Standard), which was the previous US standard, and AES (Advanced Encryption Standard), which is the current US standard, are known as representative shared key block encryption algorithms. Other various shared key block encryptions continue to be proposed, and the CLEFIA proposed by Sony Corporation in 2007 is also a shared key block encryption.

These kind of shared key block encryption algorithms are mainly configured with an encryption processing part including a round function executing unit for repeatedly executing conversions of input data, and a key scheduling part for generating round keys to be applied at each round regarding the round function unit. The key scheduling part first generates an expanded key in which the bit count is increased on the basis of a master key (master key), which is a secret key, and generates round keys (secondary keys) to be applied at each round function unit regarding the encryption processing part, based on the generated expanded key.

Configurations for repeatedly executing the round function including linear conversion units and non-linear conversion units are known as specific configurations of these kinds of algorithms. Representative structures include the Feistel structure and the generalized Feistel structure, for example. The Feistel structure and the generalized Feistel structure include structures that convert plaintext into ciphertext by the repetition of a simple round function including an F function as a data conversion function. The linear conversion processing and the non-linear conversion processing are executed by the F function. Further, NPL 1 and NPL 2 are examples of literature which discloses encryption processing applying Feistel structures.

Conversely, various new techniques are emerging such as a technique in which analysis of encryption algorithms or analysis of keys are illegally executed to perform cryptanalysis. One example of this is the related key attack. Though various countermeasures have been considered to deal with these kinds of attacks, the current state is that these are not sufficient.

### Citation List

### Non Patent Literature

NPL 1: K. Nyberg, "Generalized Feistel Networks", ASIACRYPT 96, SpringerVerlag, 1996, pp. 91-104.
NPL 2: Yuliang Zheng, Tsutomu Matsumoto, Hideki Imai: On the Construction of Block Ciphers Provably Secure and Not Relying on Any Unproved Hypotheses. CRYPTO 1989: 461-480.
NPL 3: Sony Corporation, "The 128-bit Blockcipher CLEFIA Algorithm Specification", Revision 1.0, 2007.
NPL 4: Aoki, Ichikawa, Kanda, Matsui, Moriai, Nakajima, Tokita, "128-bit Block Encryption Camellia Algorithm Specification", Version 2.0, 2001.
NPL 5: GOST 28147-89: Encryption, Decryption, and Message Authentication Code (MAC) Algorithms, RFC 5830.
NPL 6: 3rd Generation Partnership Project, Technical Specification Group Services and System Aspects, 3G Security, Specification of the 3GPP Confidentiality and Integrity Algorithms; Document 2: KASUMI Specification, V9.0.0, 2009.

Further literature includes Lawrie Brown Et Al: "Introducing the new LOKI97 Block Cipher", 12 June 1998 (1998-06-12) XP055168204; Rivest R L Et Al: "The RC6 Block Cipher", First Advanced Encryption Standard (AES) Conference, 20 August 1998 (1998-08-20), pages 1-21, XP002543314; and Merkle Ralph C ED- Kovalev Mikhail M Kovalevsigmairrix Com Sirrix AG Im Stadtwald D3 2 66123 Saarbrucken Germany Et Al, Li Xue Xu: "Fast Software Encryption Functions", 1 January 1901 (1901-01-01), Lecture Notes In Computer Science, Springer Verlag, DE, Page(s) 477- 501, XP047288201.

### Summary of Invention

### Technical Problem

The present disclosure is the result of considering the previously described situation, for example, and aims to provide an encryption processing device, an encryption processing method, and a program with a high level of security that makes illegal cryptanalysis such as related key attacks difficult.

### Solution to Problem

A first aspect of the present disclosure is an encryption processing device as defined in claim 1.

Further, a second aspect of the present disclosure is an encryption processing method to be executed in an encryption processing device, the encryption processing method being defined in claim 9.

Further, a third aspect of the present disclosure is a program to execute encryption processing in an encryption processing device, the program being defined in claim 10.

Other objects, features, and advantages of the present disclosure will become clear by the detailed descriptions based on the embodiments of the present invention described later and the attached drawings. Further, the system regarding the present specification is a logical combination configuration of multiple devices, and so each configuration of the devices is not limited to being housed within the same physical unit.

### Advantageous Effects of Invention

According to the embodiments of the present disclosure, an encryption processing device with a high level of security is achieved by supply control of round keys.

Specifically, included is an encryption processing part configured to divide configuration bits of data to be data processed into a plurality of lines, and to input, and to repeatedly execute data conversion processing applying a round function to each line of data as a round calculation; and a key scheduling part configured to output round keys to a round calculation executing unit in the encryption processing part; wherein the key scheduling part is a replacement type key scheduling part configured to generate a plurality of round keys or round key configuration data by dividing a secret key stored beforehand into a plurality of parts; and wherein the plurality of round keys are output to a round calculation executing unit sequentially executing in the encryption processing part such that a constant sequence is not repeated. According to the present configuration, an encryption processing configuration with a high level of security is achieved that has a high level of resistance to repeated key attacks or other attacks, for example.

### Brief Description of Drawings

[Fig. 1] Fig. 1 is a diagram describing an n-bit shared key block encryption algorithm corresponding to a key length of k bits.
[Fig. 2] Fig. 2 is a diagram describing a decryption algorithm corresponding to the n-bit shared key block encryption algorithm corresponding to a key length of k bits, illustrated in Fig. 1.
[Fig. 3] Fig. 3 is a diagram describing a relationship between a key scheduling part and a data encryption part.
[Fig. 4] Fig. 4 is a diagram describing an example configuration of the data encryption part.
[Fig. 5] Fig. 5 is a diagram describing an example of an SPN structure round function.
[Fig. 6] Fig. 6 is a diagram describing an example of a Feistel structure round function.
[Fig. 7] Fig. 7 is a diagram describing an example of an expanded Feistel structure.
[Fig. 8] Fig. 8 is a diagram describing an example of an expanded Feistel structure.
[Fig. 9] Fig. 9 is a diagram describing an example configuration of a non-linear conversion unit.
[Fig. 10] Fig. 10 is a diagram describing an example configuration of a linear conversion processing unit.
[Fig. 11] Fig. 11 is a diagram describing a key scheduling part (expanded key generating unit).
[Fig. 12] Fig. 12 is a diagram describing a key scheduling part (expanded key generating unit).
[Fig. 13] Fig. 13 is a diagram describing an example configuration of a block encryption GOST.
[Fig. 14] Fig. 14 is a diagram describing a Feistel structure which is a GOST data structure.
[Fig. 15] Fig. 15 is a diagram describing an attack which can provide an arbitrary secret key difference Δ.
[Fig. 16] Fig. 16 is a diagram describing a case in which each round key difference Δᵢ is divided into the secret key difference Δ at every m bits when there is a replacement type key scheduling part.
[Fig. 17] Fig. 17 is a diagram describing that the input difference for the F function becomes zero by providing an average difference of (d, d).
[Fig. 18] Fig. 18 is a diagram describing an example of a type-2 generalized Feistel structure.
[Fig. 19] Fig. 19 is a diagram describing an example configuration of an XOR after the F function.
[Fig. 20] Fig. 20 is a diagram describing an example configuration of an XOR after the F function.
[Fig. 21] Fig. 21 is a diagram describing an example configuration in which a secret key K is divided into four equal parts every (n/2) bits when the key is 2n bits, and are supplied while being shuffled every four rounds.
[Fig. 22] Fig. 22 is a diagram describing an example configuration in which the secret key K is divided into eight equal parts at every (n/4) bits, and two (n/4)-bit portions are supplied while being shuffled every four rounds.
[Fig. 23] Fig. 23 is a diagram describing an example configuration in which the secret key K is divided into eight equal parts every (n/2) bits when the length is 4n bits, and are supplied while being shuffled every eight rounds.
[Fig. 24] Fig. 24 is a diagram describing an example configuration in which the secret key K is divided into eight equal parts every (n/4) bits when the key is 2n bits, and two (n/4)-bit portions are supplied while being shuffled every four rounds.
[Fig. 25] Fig. 25 is a diagram describing an example configuration in which the secret key is divided into eight equal parts every (n/4) bits wherein four of these are used in a round key RK_{r,0} of a left side F function, and the remaining four are used in a round key RK_{r,1} of a right side F function.
[Fig. 26] Fig. 26 is a diagram describing a model in which the cyclic shift in a generalized Feistel structure with 4 data lines is changed to a round permutation (generalized Feistel structure+ with 4 data lines).
[Fig. 27] Fig. 27 is a diagram describing an example of applying a shuffling technique similar to that in Fig. 25, as to a generalized Feistel structure with 4 data lines.
[Fig. 28] Fig. 28 is a diagram illustrating a configuration method of a key scheduling part when the secret key is (5n/4) bits, and the round key necessary for one round is (n/2) bits.
[Fig. 29] Fig. 29 is a diagram describing an example configuration when the round keys are simply input in order.
[Fig. 30] Fig. 30 is a diagram describing an example configuration when the round keys are simply input in order.
[Fig. 31] Fig. 31 is a diagram describing a configuration using round keys corresponding to one round for an n-bit block encryption having a generalized Feistel structure with d data lines of a divided number d.
[Fig. 32] Fig. 32 is a diagram describing an example configuration in which the secret key is n bits, round keys of n/4 bits are generated from dividing the n-bit secret key into four equal parts, and these are input two at a time for each round.
[Fig. 33] Fig. 33 is a diagram describing an example configuration in which the secret key is (5/4)n bits, round keys of n/4 bits are generated from dividing the n-bit secret key into five equal parts, and these are input two at a time for each round.
[Fig. 34] Fig. 34 is a diagram describing an example configuration in which the secret key is n bits, round keys of n/4 bits are generated from dividing the (5/4)n-bit secret key into five equal parts, and these are input two at a time for each round.
[Fig. 35] Fig. 35 is a diagram describing an example configuration in which the selection sequence of keys is changed in units of multiple rounds.
[Fig. 36] Fig. 36 is a diagram describing an example configuration of a round key supply set so that a replacement processing executed in units of four rounds is different each time.
[Fig. 37] Fig. 37 is a diagram describing an example configuration in which the selection sequence of keys is changed in units of multiple rounds.
[Fig. 38] Fig. 38 is a diagram describing an example configuration in which replacement is performed every three rounds, and six keys are used in the three rounds.
[Fig. 39] Fig. 39 is a diagram describing an example configuration in which the selection sequence of keys is changed in units of multiple rounds.
[Fig. 40] Fig. 40 is a diagram describing a round key supply configuration as a selector.
[Fig. 41] Fig. 41 is a diagram describing a round key supply configuration as the selector.
[Fig. 42] Fig. 42 is a diagram describing a round key supply configuration as a selector.
[Fig. 43] Fig. 43 is a diagram illustrating an example configuration of an IC module 700 as the encryption processing device.

### Description of Embodiments

Hereafter, an encryption processing device, an encryption processing method, and a program related to the present disclosure will be described in detail with reference to the drawings. The description will occur according to the following items.
1. Shared Key Block Encryption Overview
2. Configuration of Key Scheduling Part and Processing Overview
3. Attacks on Key Scheduling Parts and Examples of Previous Countermeasures against These Attacks
4. Replacement Type of Key Scheduling Part That Can Obtain Security against Related Key Attacks
5. Various Configuration Examples of Key Replacement Type of Key Scheduling Parts (Variation)
6. Configuration Examples of Encryption Processing Device
7. Conclusion of Configuration of the Present Disclosure

### [1. Shared Key Block Encryption Overview]

First, an overview of share key block encryption will be described.

### (1-1. Shared Key Block Encryption)

The following definition specifies that which designates shared key block encryption here (hereafter, block encryption).

Block encryption obtains a plaintext P and a key K as input, and outputs a ciphertext C. The bit length of the plaintext and the ciphertext is called a block size, which is written as n. n is an arbitrary integer value that is normally one value determined beforehand for each block encryption algorithm. This case in which the block length is an n block encryption is sometimes called an n-bit block encryption.

The bit length of the key is expressed as k. The key has an arbitrary integer value. The shared key block encryption algorithm can support one or multiple key sizes. For example, for some block encryption algorithm A, the block size is n=128, and so a configuration is possible which supports a key size of k=128, k=192, or k=256.
Plaintext P: n bits
Ciphertext C: n bits
Key K: k bits

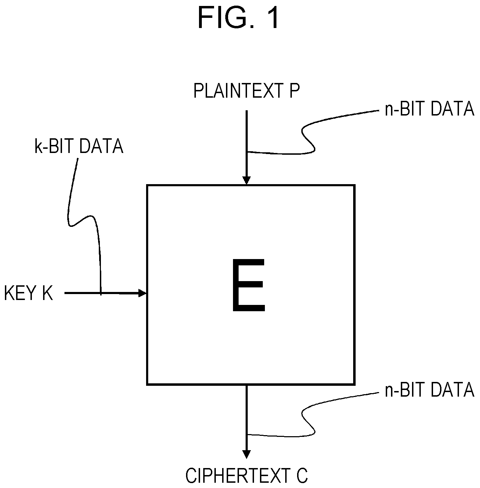

Fig. 1 illustrates a diagram of an n-bit shared key block encryption algorithm E corresponding to a key length of k bits.

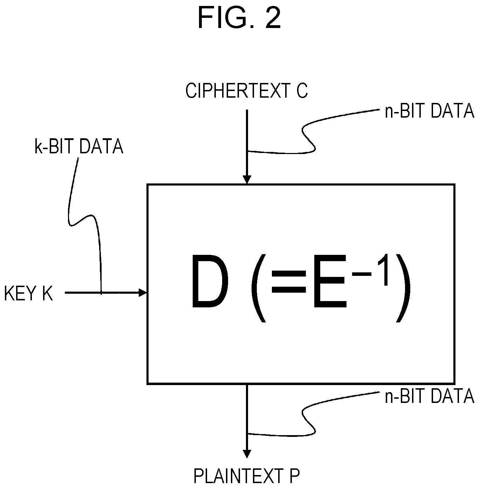

A decryption algorithm D corresponding to the encryption algorithm E can be defined as an inversion function E⁻¹ of the encryption algorithm E, which receives the ciphertext C and key K as the input, and outputs the plaintext P. Fig. 2 illustrates a diagram of the decryption algorithm D corresponding to the encryption algorithm E illustrated in Fig. 1.

### (1-2. Internal Configuration)

The block encryption thought of as a division into two portions. One is a "key scheduling part" to which the key K is input, and outputs an expanded key K' (bit length k') by expanding the bit length according to certain previously determined steps, and the other is a "data encryption part" that receives the plaintext P and the key K' expanded from the key scheduling part, performs a data conversion, and outputs the ciphertext C.

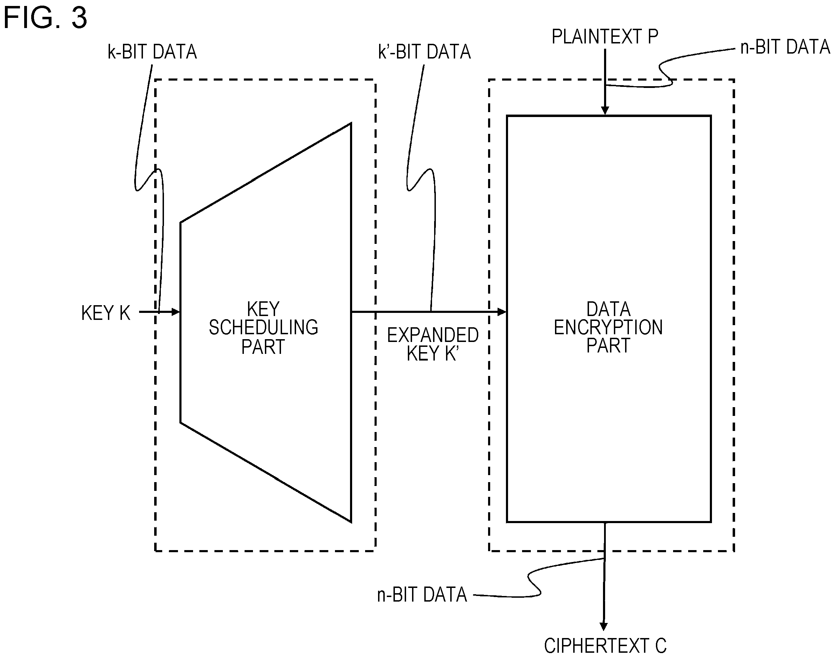

The relationship between these two portions is illustrated in Fig. 3.

### (1-3. Data Encryption Part)

The data encryption part used in the following embodiments can be divided into processing units called round functions. The round function receives two units of data as the input, conducts processing internally, and outputs one unit of data. One part of the input data is an n-bit data currently being encrypted, which results in a configuration in which the output from the round function for some round is supplied as the input for the next round. The other part of the input data is used as data for a portion of the expanded key output from the key scheduler, and this key data is called the round key. Also, the total number of round functions is called the total round number, and is a value determined beforehand for each encryption algorithm. Here, the total round number is expressed as R.

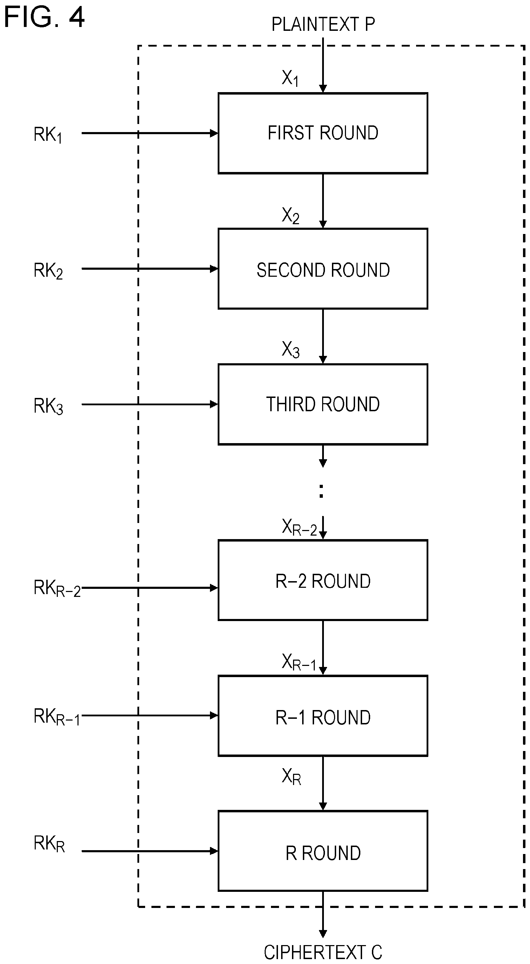

An overview of the data encryption part is illustrated as in Fig. 4 when looking from the input side of the data encryption part in which the input data for the first round is designated as X₁, the data input in the round function for an i number of rounds is designated as Xᵢ, and the round key is designated as RKᵢ.

### (1-4. Round Function)

The round function can have various forms depending on the block encryption algorithm. The round function can be classified by the structure adopted by this encryption algorithm (structure). Typical structures used here as examples are SPN structures, Feistel structures, and expanded Feistel structures.

### (A) SPN Structure Round Function

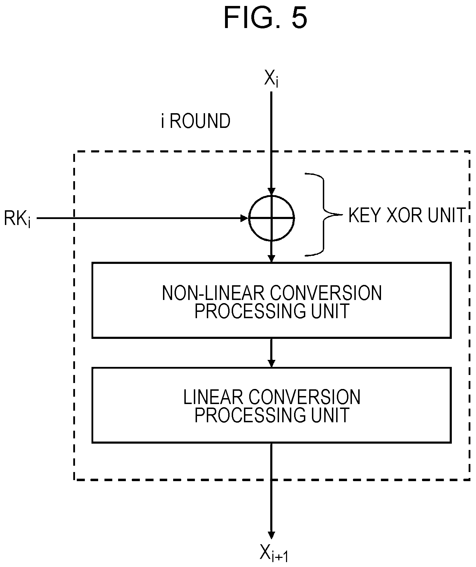

This structure applies linear conversion processing, non-linear conversion, and XOR calculations on the round key and all of the n-bit input data. The order of each calculation is not particularly determined. Fig. 5 illustrates an example of an SPN structure round function.

### (B) Feistel Structure

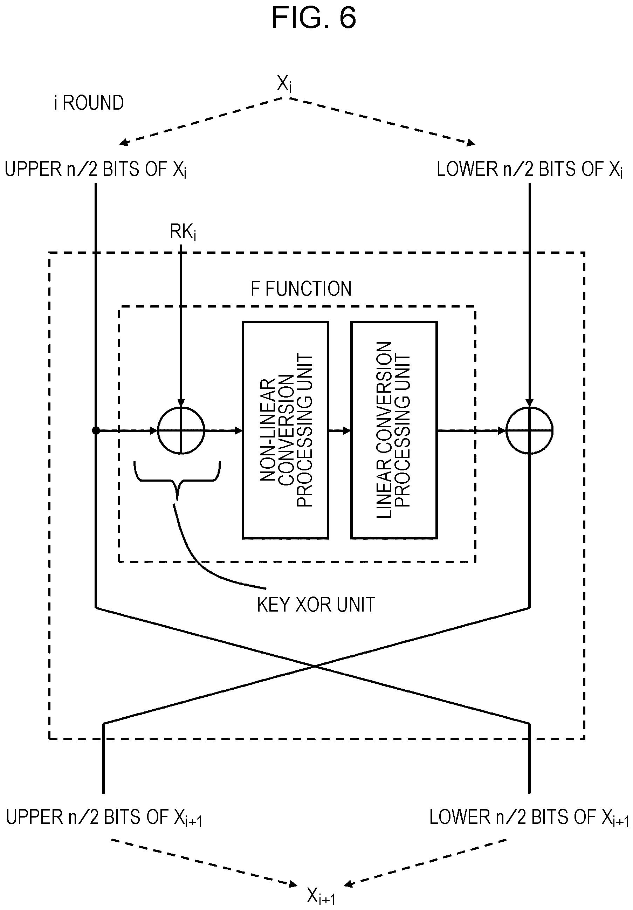

The n-bit input data is divided into two units of n/2-bit data. A function (F function) is applied with one part of this data and the round key as the input, and the output and the other part of the data is XOR calculated. The result of shuffling both sides of this data becomes the output data. Though there are various types of internal configuration of the F function, but these are basically achieved similarly to the SPN structure with a combination of XOR calculations with the round key data, non-linear calculations, and linear conversions. Fig. 6 illustrates an example of a Feistel structure round function.

### (C) Expanded Feistel Structure

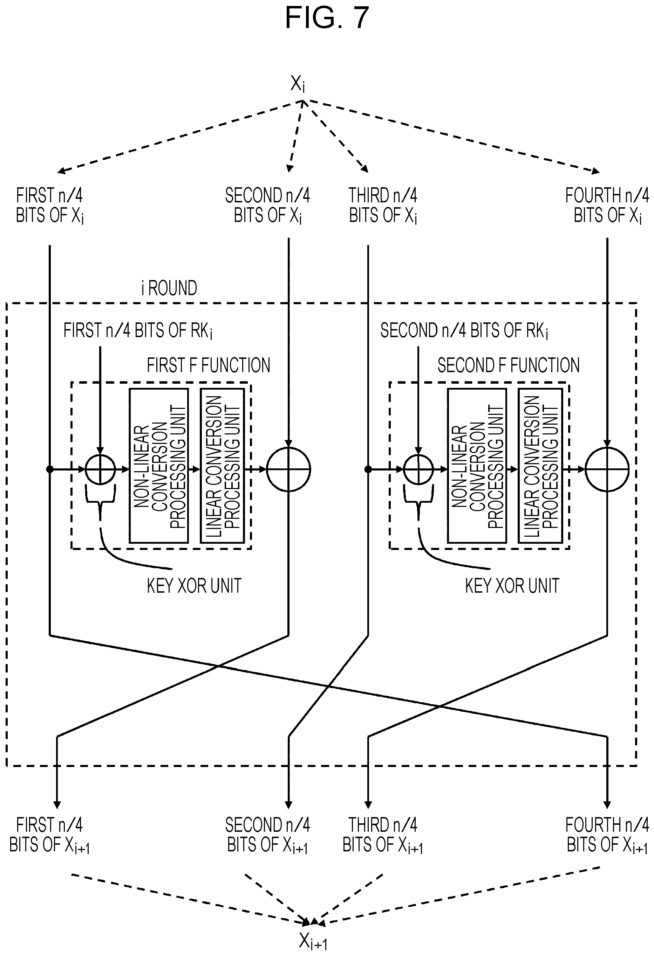

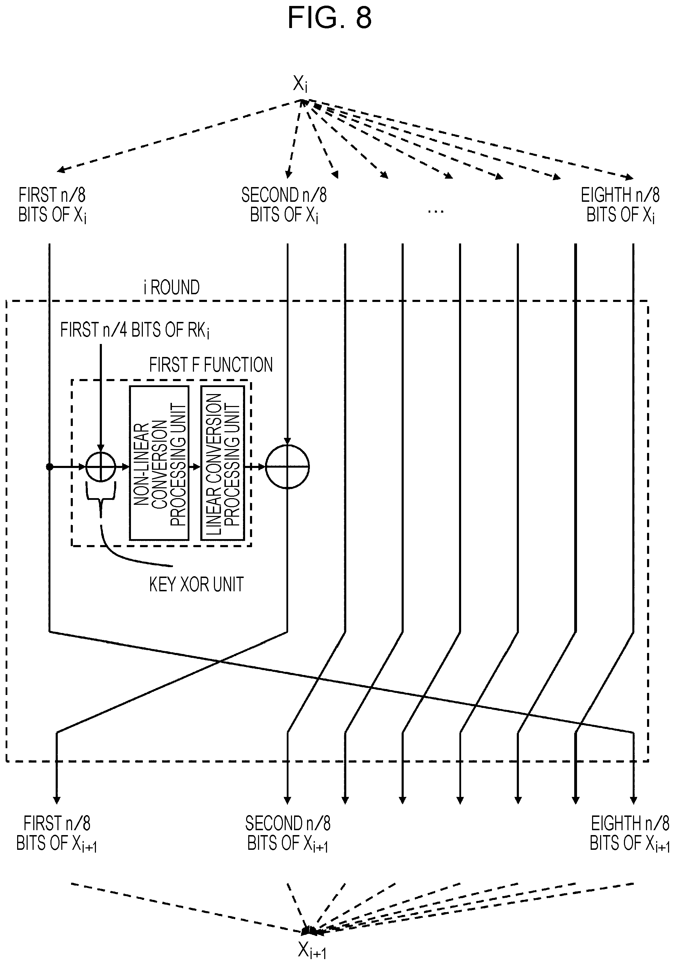

The data division number of two regarding the Feistel structure is expanded into a format of three or more divisions with the expanded Feistel structure. If the division number is designated as d, then various expanded Feistel structures can be defined depending on d. As the size if the F function input and output is relatively smaller, this is suited for small implementations. Fig. 7 illustrates an example of an expanded Feistel structure in which d=4, and two F functions are applied in parallel within one round. Also, Fig. 8 illustrates an example of an expanded Feistel structure in which d=8, and one F function is applied within one round.

### (D) Generalized Feistel Structure with d Data Lines

A d/2 number of F functions are applied in parallel within one round for expanded Feistel structures in which the division number d is an even number.

Also, a cyclic shift is used as a replacement between rounds.

Note that Figs. 7, 18, and 20 illustrate a generalized Feistel structure with 4 data lines.

### (1-5. Non-linear Conversion Processing Unit)

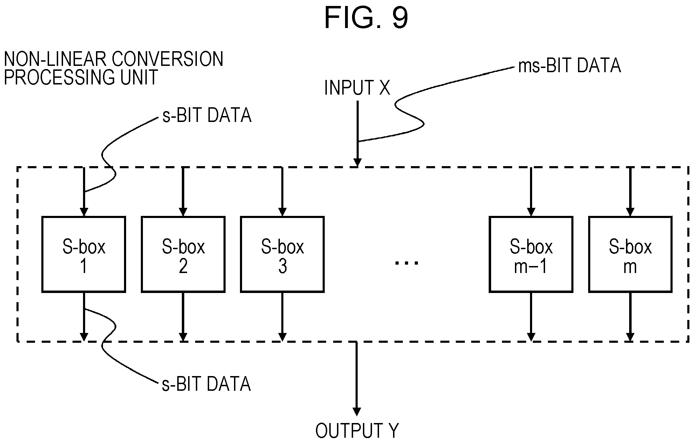

The implementation costs tend to increase as the size of the input data increases for non-linear conversion processing units. In order to circumvent this, many configurations are used in which the corresponding data is divided into multiple units, and non-linear conversion is conducted on this data. For example, when the input size is designated as ms bits, these configurations divide an m number of data units every s bits, and perform non-linear conversions on this data in which the input and output is s bits. The non-linear conversions in these s-bit units are called S-boxes. Fig. 9 illustrates an example.

### (1-6. Linear Conversion Processing Unit)

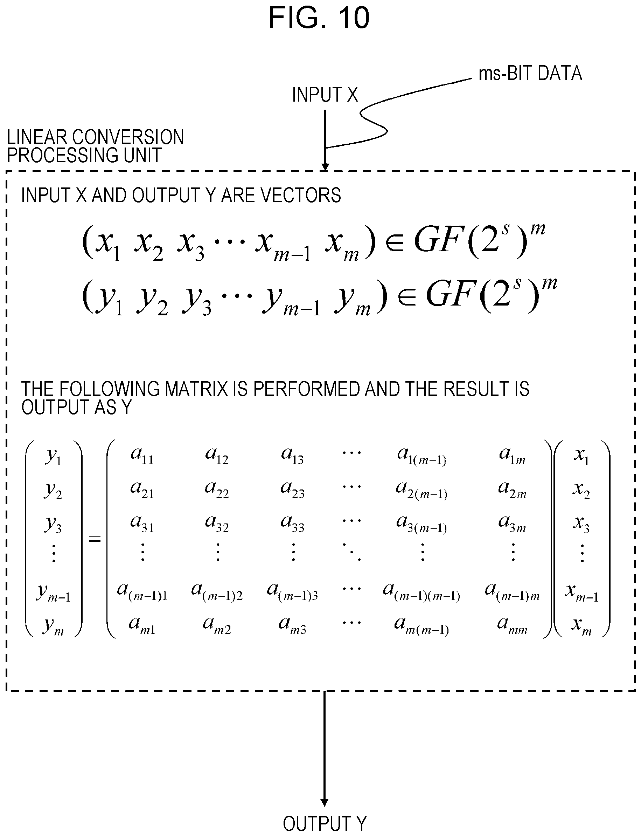

Linear conversion processing units can be defined as matrices considering their nature. The elements of the matrix can generally be expressed in various ways such as a body element of GF (2⁸) and an element of GF (2). Fig. 10 illustrates an example of a linear conversion processing unit defined by a matrix of m × m, which defines the ms-bit input and output as GF (2^{s}).

### [2. Configuration of Key Scheduling Part and Processing Overview]

Before describing the encryption processing of the present disclosure, a configuration of the key scheduling part, which is a preliminary configuration and a processing overview will be described.

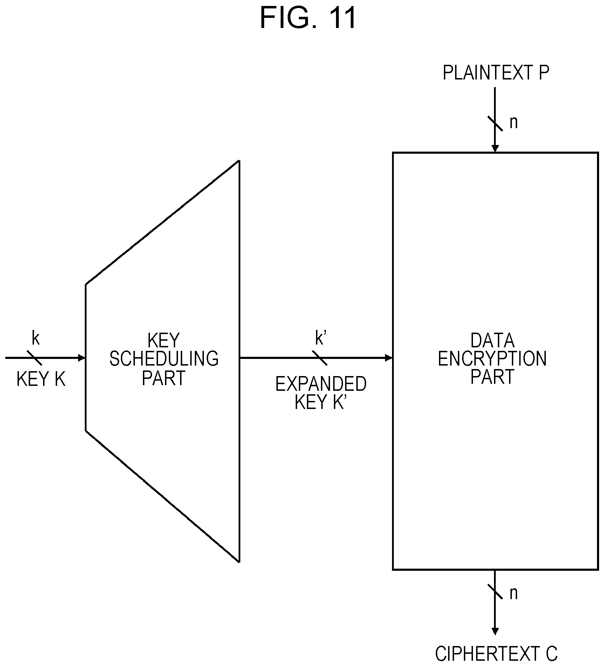

The key scheduling part is a function as illustrated in Fig. 11 which (expanding key generating unit) inputs the secret key K of k bits, and generates a k'-bit expanded key (round key) K' by some determined conversion.

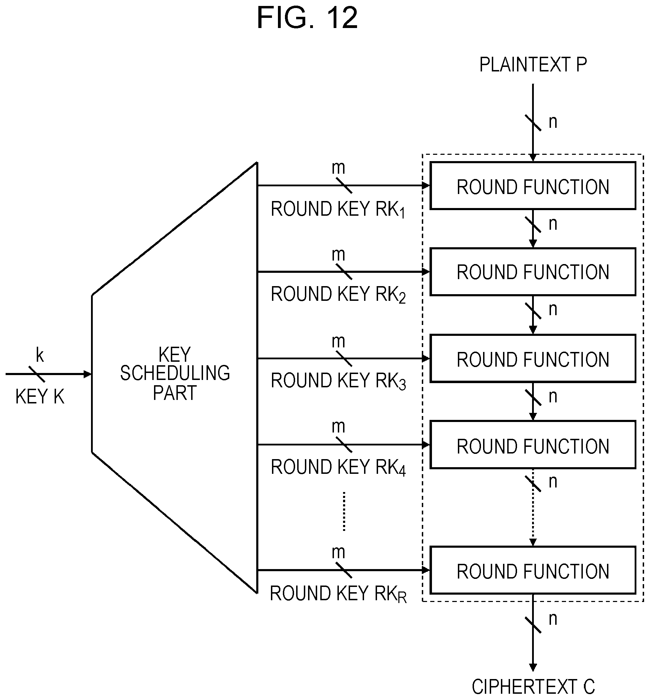

Generally, k < k', and when the non-linear calculations called round functions are repeatedly performed by the data encryption part, the round keys supplied to each round function are designated as m bits, and the number of round function repetitions is designated as R, k' = m × R. This setting is as illustrated in Fig. 12.

For example, regarding the shared key block encryption AES,
when k = 128,
m = 128, and R = 11,
and so k' = 1408.

When k = 192,
m = 128, and R = 13,
and so k' = 1664.

The following properties (Properties 1 through 3) are desired to ensure security in the key scheduling part.

### (Property 1) There is no equivalent key

Further, when K0' = K1' regarding an expanded key K0' when a secret key K0 is input and an expanded key K1' when a secret key K1 (≠ K0) is input, K0 and K1 are called equivalent keys.

### (Property 2) Has sufficient resistance against related key attacks (related key attack)

Whereas general attacks use the bias in the data between plaintext and ciphertext (difference, linearity, etc.) resulting from some fixed secret key, related key attacks use the bias in the data between plaintext and ciphertext resulting from multiple secret keys.

For example, these attacks are performed predicated on that the values of two secret keys are not known, but the difference between the secret keys is known.

There are also attacks strongly predicated on that the attacker freely selects the difference between the secret keys. It is desirable to achieve a level of security even under this predication.

In the event of normal difference attacks (difference attacks with no consideration for related keys), the attacker uses, for example, only a combination of multiple plaintexts P and ciphertexts C (= E (K, P)) encrypted by an unknown secret key K, and derives this unknown secret key K.

However, in the event of related key difference attacks, the attacker also uses a combination of multiple plaintexts P' and ciphertexts C' (= E (K(+)ΔK, P')) encrypted by a K(+)ΔK in which the attacker added an arbitrarily specified secret key difference ΔK regarding the unknown secret key K in addition to the combination of multiple plaintexts P and ciphertexts C (= E (K, P)) encrypted by an unknown secret key K to derive the unknown secret key K.

Note that the (+) represents the XOR operator.

Thus, with related key difference attacks, the information that the attacker can use is greater, and so the strength of the attacker is more than that of normal difference attacks.

(Property 3) Has sufficient resistance against slide attacks (slide attack).

For example, there is a potential for the level of security to be lost when a slid value is taken as when the round key from the input of a secret key K0 is designated as RK₁, RK₂, ..., RK_{R}, and the round key from the input of a secret key K1 is designated as RK₂, RK₃, ..., RK_{R+1}.

The following properties (4 through 9) are further desired in the key scheduling part regarding implementation matters.

### (Property 4) Implementation is simple

### (Property 5) Setup time to generate the expanded key from the secret key is short

### (Property 6) Expanded keys can be generated on the fly.

### (Property 7) Encryption key scheduling part and decryption key scheduling part are shared to the extent possible

### (Property 8) Data encryption part and data decryption part are shared to the extent possible

### (Property 9) Changes in secret key length are readily supported

Scheduling units preferably satisfy these properties in a well-balanced manner, from the perspectives of security and implementation.

### [3. Attacks on Key Scheduling Parts and Examples of Previous Countermeasures against These Attacks]

Next, attacks on key scheduling parts and example of previous countermeasures against these attacks will be described.

There are various designs of key scheduling parts for each type shared key block encryption.

There is a deep relationship with the data encryption part and the level of security and implementation performance of the key scheduling part, but it is generally thought there are tradeoffs between the level of security and implementation performance similar as with the data encryption part.

Examples of encryptions in which a complex non-linear function is introduced into the key scheduling part include CLEFIA (NPL 3: Sony Corporation, "The 128-bit Blockcipher CLEFIA Algorithm Specification", Revision 1.0, 2007) and Camellia (NPL 4: Aoki, Ichikawa, Kanda, Matsui, Moriai, Nakajima, Tokita, "128-bit Block Encryption Camellia Algorithm Specification", Version 2.0, 2001) among others. These have a high level of security against attack methods such as related key attacks occurring in the key scheduling part, but the implementation cost is comparatively high, and there is a problem in which circuit scales become very large when implementing in hardware in particular. Also, AES is an example of encryption having a key scheduling part in which a comparatively simple non-linear function has been introduced in order to raise implementation performance, but it is known that AES is fragile against related key attacks (for cases of 192- and 256-bit keys).

Further, a technique as an example of a technique to further raise the implementation performance involves a configuration of only a linear function without using a non-linear function. Within these, a key scheduling part which divides the secret key data into multiple parts, and only replaces these does not require many circuits to implement in hardware in particular, and so has a high level of implementation performance. This kind of key scheduling part is called a replacement type key scheduling part.

While the replacement type key scheduling part has a high level of implementation performance, there are many methods that have problems regarding their level of security.

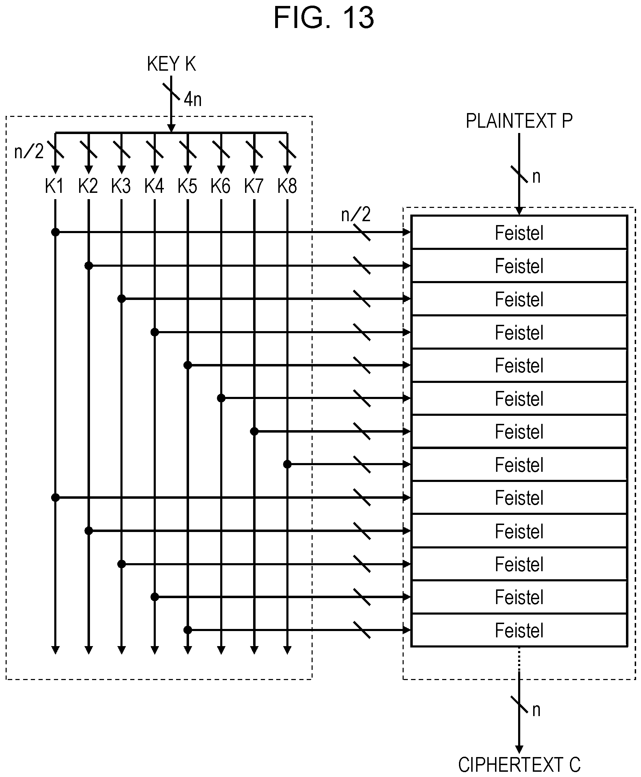

For example as illustrated in Fig. 13, the key scheduling part regarding the block encryption GOST (NPL 5: GOST 28147-89: Encryption, Decryption, and Message Authentication Code (MAC) Algorithms, RFC 5830) has a structure to divide a 4n-bit secret key K into eight equal parts every (n/2) bits, and designate these in order as the round keys.

As the key scheduling part can be configured as only a selector for each round without any calculations against the secret key K, this has a feature in which the number of circuits necessary to implement as hardware is very small.

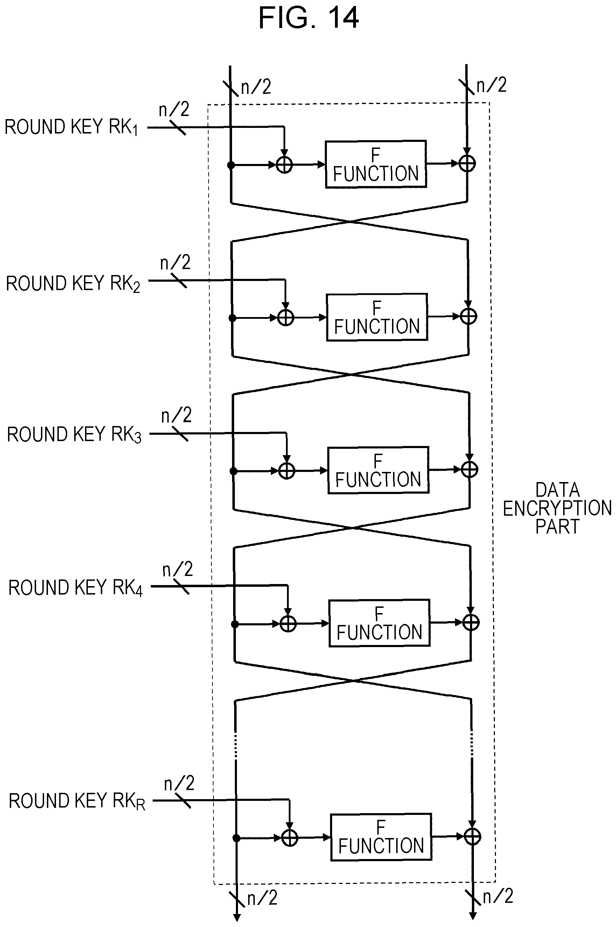

However, as illustrated in Fig. 14, the GOST data structure takes the Feistel structure and performs an XOR before each F function of the round keys, so it is known that this is fragile against related key attacks, and it is also known that there in actual probability of one that an attack will be successful.

### (Related Key Attacks against GOST that have a Probability of One to Succeed)

The round keys obtained from the secret key K0 are designated as RK0₁, RK0₂, ..., and RK0_{R}, and the round keys obtained from the secret key K1 are designated as RK1₁, RK1₂, ..., RK1_{R}. At this time, the difference between the secret key K0 and the secret key K1 is designated as the secret key difference Δ, and the difference between each round key is designated as the round key difference Δ₁, Δ₂, ..., and Δ_{R}.

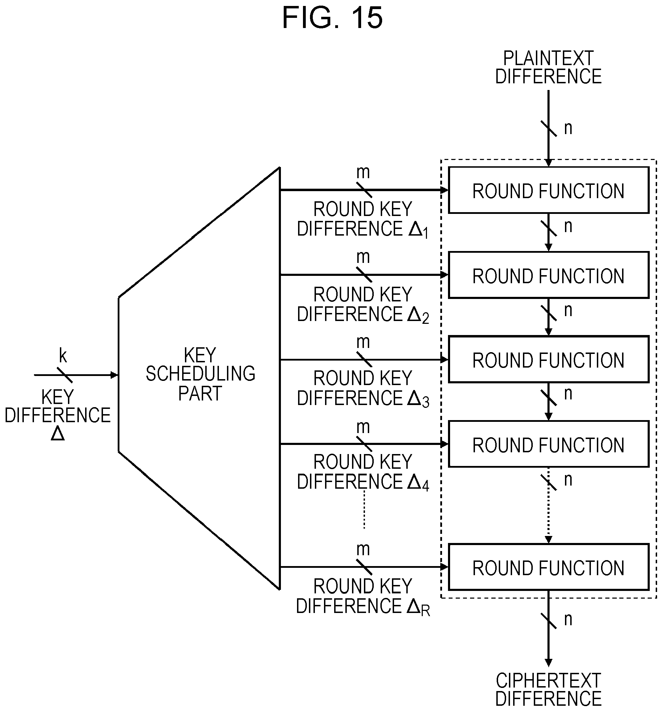

Here, as illustrated in Fig. 15, it is assumed that the attacker can provide an arbitrary secret key difference Δ. At this time, regarding CLEFIA, Camellia, and others which introduce a complex non-linear function into the key scheduling part, each round key difference Δᵢ is not uniquely predetermined, and so attacks on the data encryption part are difficult.

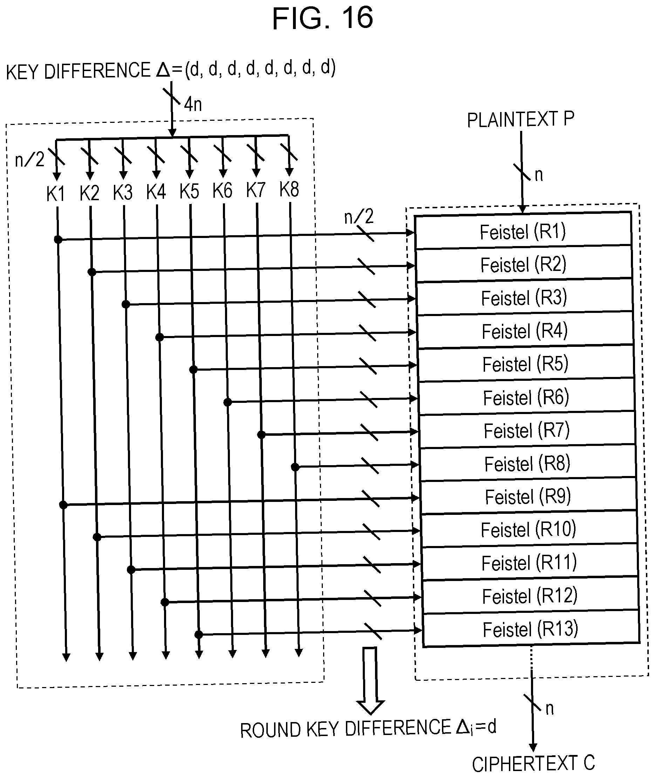

However, as illustrated in Fig. 16, according to those having replacement type key scheduling parts, each round key difference Δᵣ is that in which the secret key difference Δ is divided every m bits. Regarding GOST for example, when Δ = (d, d, d, d, d, d, d, d) (Δ is 4n bits, and d is (n/2) bits, so as n = 64 in the case of GOST, this becomes 256 bits, and 32 bits, respectively), all round key differences Δᵢ are equivalent to d.

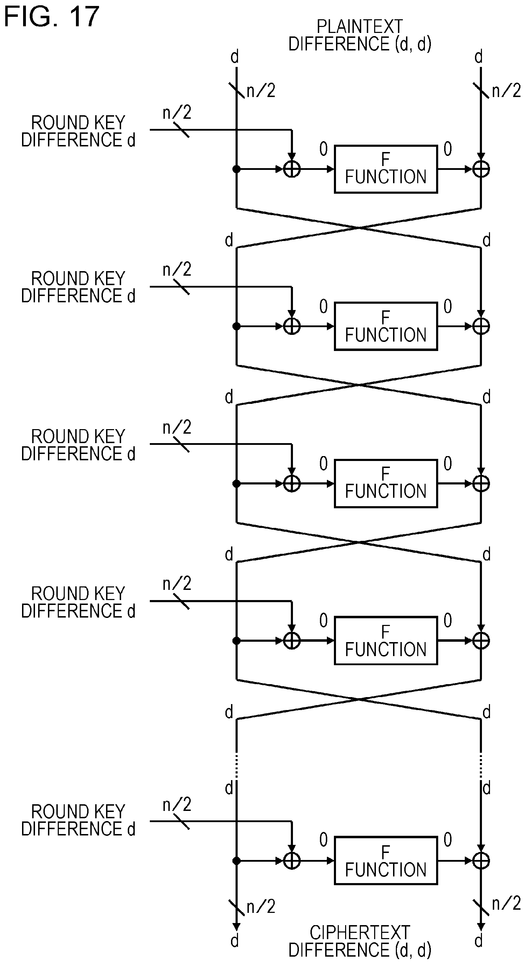

At this time, when the Feistel structure is taken, and an XOR is performed before the round key supplied in each round (R1, R2, R3, ...) to each F function, the input difference into the F function is zero by providing (d, d) as the plaintext difference as illustrated in Fig. 17. When the input difference into the F function is zero, the output difference is always zero, and so the input difference into the next round function is (d, d).

The difference of (d, d) is propagated similarly for all round functions, and so the ciphertext difference is always (d, d).

For this reason, when the ciphertext obtained from the input of the plaintext P and secret key K into GOST is designated as C,
secret key K (+) (d, d, d, d, d, d, d, d),
plaintext P (+) (d, d),
is input to obtain a ciphertext C', which results in C' = C (+) (d, d) at a probability of one.

The probability of obtaining this kind of equality is called success probability of an identification attack using a related key attack. It is necessary to illustrate that this probability is actually sufficiently small regarding block encryption, which is strong against related key attacks.

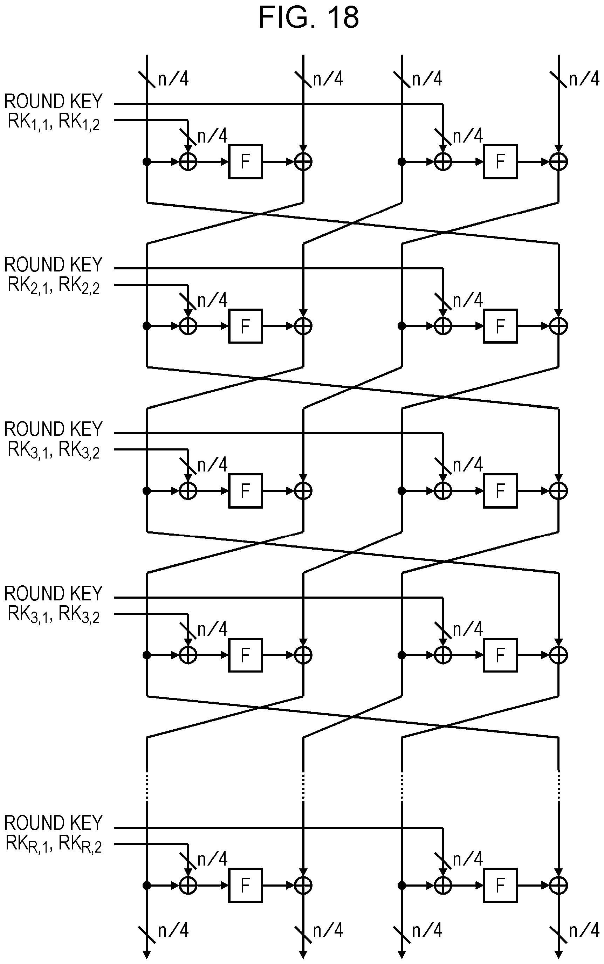

Also, for example, regarding a type of structure called a type-2 generalized Feistel structure as illustrated in Fig. 18, when performing an XOR on the round key before the F function using a replacement type key scheduling part, this similarly results in a configuration of a related key attack that transitions at a probability of one.

KASUMI (NPL 6: 3rd Generation Partnership Project, Technical Specification Group Services and System Aspects, 3G Security, Specification of the 3GPP Confidentiality and Integrity Algorithms; Document 2: KASUMI Specification, V9.0.0, 2009) is an example of an encryption having another kind of replacement type key scheduling part.

However, though the key scheduling part in KASUMI has a high level of implementation performance, it is also known to be fragile against related key attacks.

### [4. Replacement Type of Key Scheduling Part That Can Obtain Security against Related Key Attacks]

With consideration to the previously described problems, hereafter, configuration methods of replacement type key scheduling parts that can obtain a level of security against related key attacks without a large implementation cost will be described.

The present method first divides the secret key K into multiple equal parts, and supplies these to the data encryption part according to the following techniques.

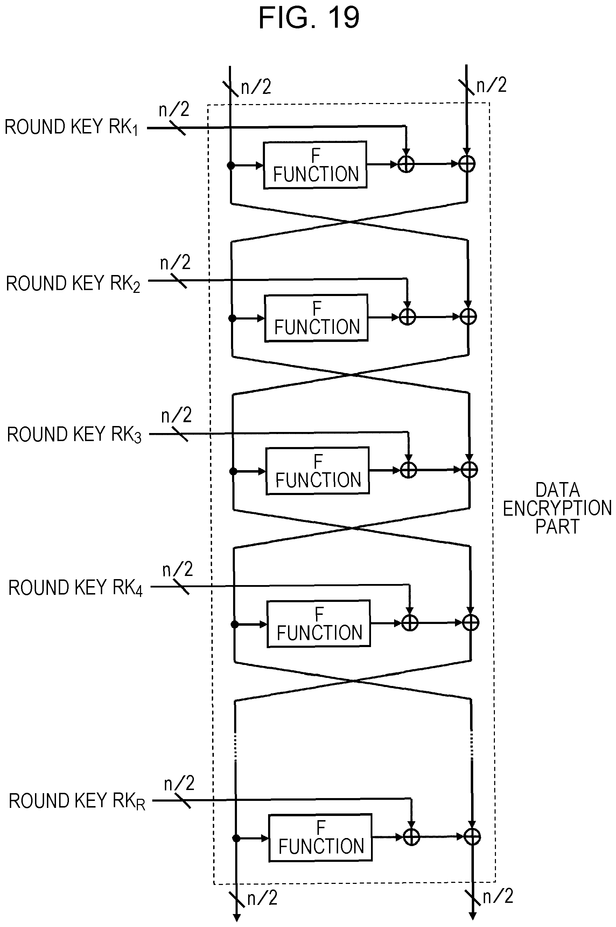

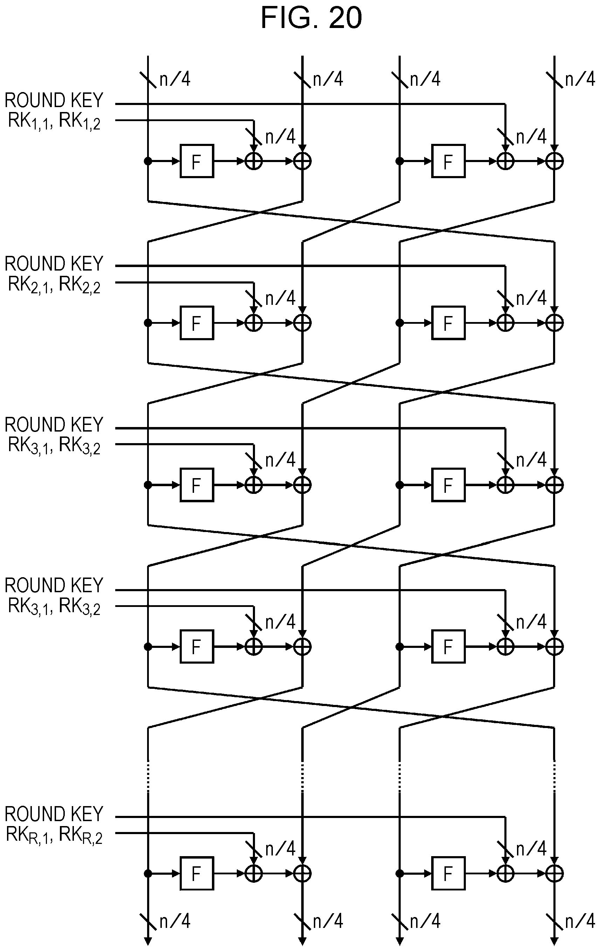

(Technique 1) Change of round key insertion position: instead of performing an XOR on the round key before the F function as with the related art (position illustrated in Fig. 14 and Fig. 18, for example), the XOR is taken after the F function (position illustrated in Fig. 19 and Fig. 20, for example).

(Technique 2) Change in round key generation replacement: the round key is generated using a replacement method that is secure against related key attacks in accordance with the structure of the data encryption part.

The following advantages can be obtained by configuring the key scheduling part in this way.

### (Advantage 1) High Implementation Performance

A high level of implementation performance can be expected similar to that of the related art by using a replacement type key scheduling part. There is a particular advance when implementing as hardware as the number of necessary circuits can be reduced.

### (Advantage 2) Increase in Level of Security by Changing the Insertion Position of the Round Key

As with the configurations illustrated in Fig. 19 and Fig. 20, by performing the XOR on the round key after the F function instead of before, related key attacks succeeding at a probability of one such as with the related art GOST can be prevented even though a replacement type key scheduling part is used.

Also, the use of these implementation techniques also leads to an increase in the implementation performance of the data encryption part.

### (Advantage 3) Improvement in the Level of Security by Changing the Replacement Method of the Round Key

Instead of supplying the divided secret key in order, which is different from that of the methods according to the related art, they are suitably supplied in a shuffled sequence so as to have resistance against related key attacks.

This sequence is linked to the bit length and number of divisions of the secret key K and the structure of the data encryption part, and so it is necessary to design the key scheduling part for each data encryption part structure.

Regarding the Feistel structure executing one F function per round as illustrated in Fig. 19, the length of one round key is (n/2) bits, and the secret key K is divided in to 4 equal parts of (n/2) bits when the key is 2n bits, and these parts are supplied shuffled every four rounds.

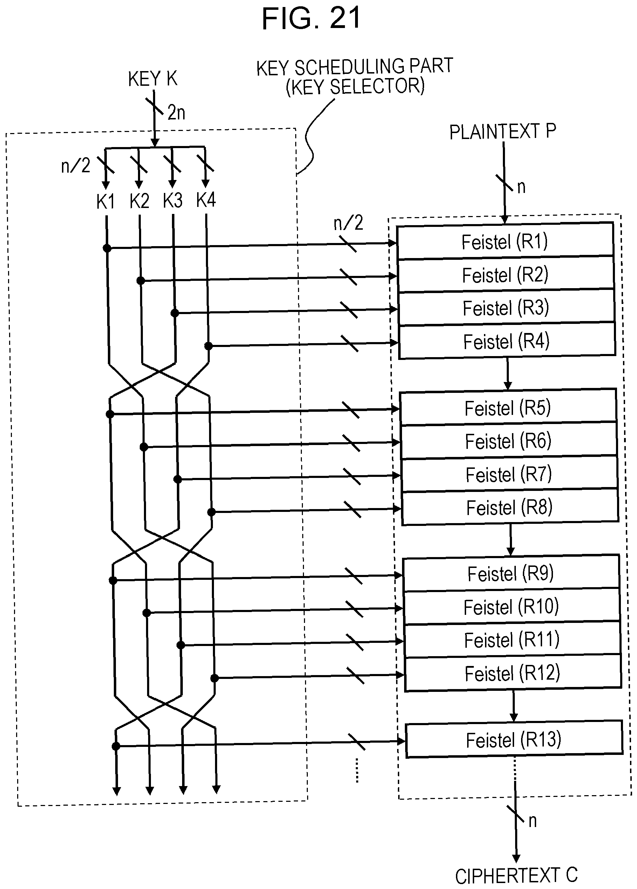

Fig. 21 illustrates this setting.

The supply processing of the round keys as illustrated in Fig. 21 will be described.

The secret key K is 2n-bit key data.

This 2n-bit secret key K is divided into four equal parts, and four round keys K1, K2, K3, and K4 are generated.

The four round keys K1, K2, K3, and K4 are (n/2)-bit key data.

These four round keys K1, K2, K3, and K4 are used in a different sequence at each unit in which one unit is four rounds.

The first four rounds as illustrated in Fig. 21: the round keys K1 through K4 are input and applied by the following sequence regarding R1 through R4.
Round R1: round key K1
Round R2: round key K2
Round R3: round key K3
Round R4: round key K4

The next four rounds: the round keys K1 through K4 are input and applied by the following sequence regarding R5 through R8.
Round R5: round key K3
Round R6: round key K1
Round R7: round key K4
Round R8: round key K2

The next four rounds: the round keys K1 through K4 are input and applied by the following sequence regarding R9 through R12.
Round R9: round key K4
Round R10: round key K3
Round R11: round key K2
Round R12: round key K1

In this way, with four rounds as a unit, the round key input sequence different for each unit is applied.

Also, it is possible to divide at a unit which is smaller than the length of the round key, so it is also possible to divide the 2n-bit secret key K into eight equal parts every (n/4) bits, and two of these (n/4)-bit units of data are supplied while being shuffled every four rounds.

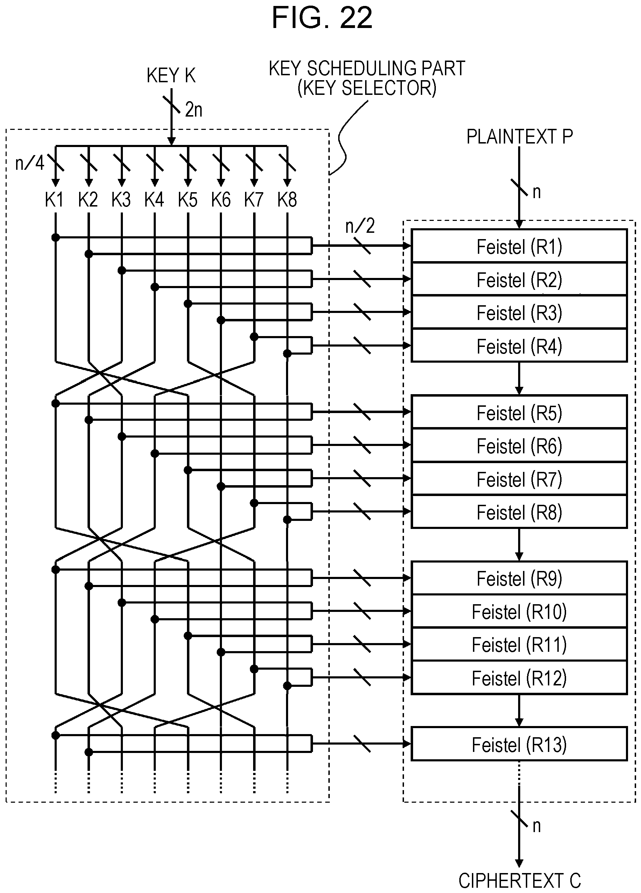

An example of this is the configuration illustrated in Fig. 22.

The supply processing of round keys as illustrated in Fig. 22 will be described.

The secret key K is 2n-bit key data.

This 2n-bit secret key K is divided into eight equal parts, and eight keys K1, K2, K3, K4, K5, K6, K7, and K8 are generated.

The eight keys K1 through K8 are (n/4)-bit key data.

(n/2)-bit round keys made up from two keys of combined data selected from these eight keys K1 through K8: KxKy are used in a sequence different at each unit in which one unit is four rounds.

The first four rounds as illustrated in Fig. 22: the round keys KxKy as a combination of the key data K1 through K8 are input and applied by the following sequence regarding R1 through R4.
Round R1: round key K1K2
Round R2: round key K3K4
Round R3: round key K5K6
Round R4: round key K7K8

The next four rounds: the round keys KxKy as a combination of the key data K1 through K8 are input and applied by the following sequence regarding R5 through R8.
Round R5: round key K3K4
Round R6: round key K2K7
Round R7: round key K1K6
Round R8: round key K5K8

The next four rounds: the round keys KxKy as a combination of the key data K1 through K8 are input and applied by the following sequence regarding R9 through R12.
Round R9: round key K2K7
Round R10: round key K4K5
Round R11: round key K3K6
Round R12: round key K1K8

In this way, with four rounds as a unit, the round key input sequence different for each unit is applied.

Also, the secret key K is divided into eight equal parts every (n/2) bits when the length is 4-n bits, and these parts are supplied while being shuffled every eight rounds.

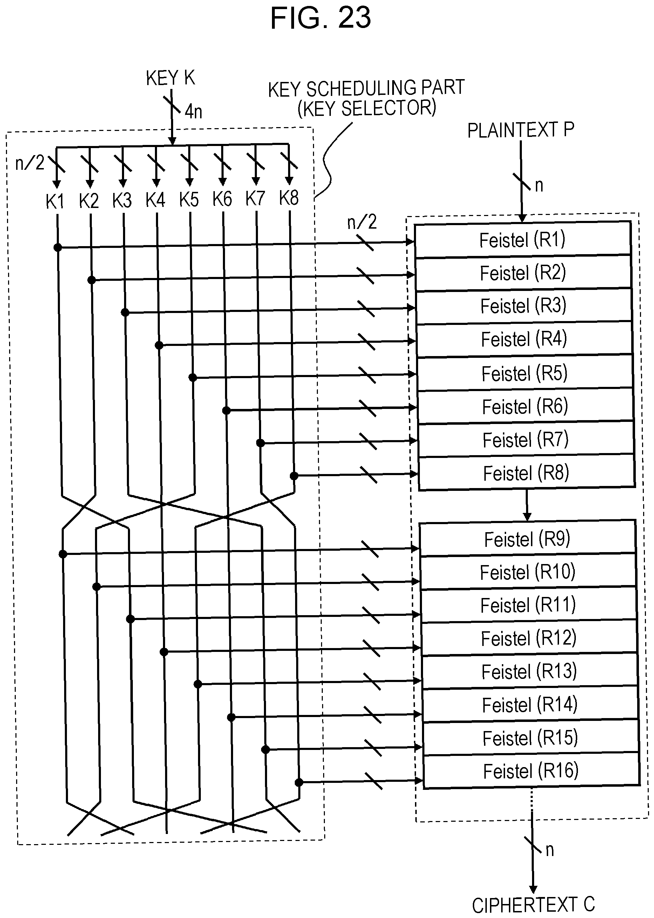

An example of this is the configuration illustrated in Fig. 23.

The supply processing of round keys as illustrated in Fig. 23 will be described.

The secret key K is 4n-bit key data.

This 4n-bit secret key K is divided into eight equal parts, and eight round keys K1, K2, K3, K4, K5, K6, K7, and K8 are generated.

The eight round keys K1 through K8 are (n/2)-bit key data.

These eight round keys K1 through K8 are used in a sequence different for each unit in which one unit is eight rounds.

The first eight rounds as illustrated in Fig. 23: the round keys are input and applied by the following sequence regarding R1 through R8.
Round R1: round key K1
Round R2: round key K2
Round R3: round key K3
Round R4: round key K4
Round R5: round key K5
Round R6: round key K6
Round R7: round key K7
Round R8: round key K8

The next eight rounds: the round keys are input and applied by the following sequence regarding R9 through R16.
Round R9: round key K2
Round R10: round key K5
Round R11: round key K1
Round R12: round key K4
Round R13: round key K8
Round R14: round key K6
Round R15: round key K3
Round R16: round key K7

In this way, with eight rounds as a unit, the round key input sequence different for each unit is applied.

Also as illustrated in Fig. 20 regarding a generalized Feistel structure with 4 data lines executing two F functions simultaneously in one round, the round keys are two units of (n/4) bits. When the secret key K is 2n bits, it is divided into eight equal parts every (n/4) bits, and two units of (n/4) bits is supplied while being shuffled every four rounds.

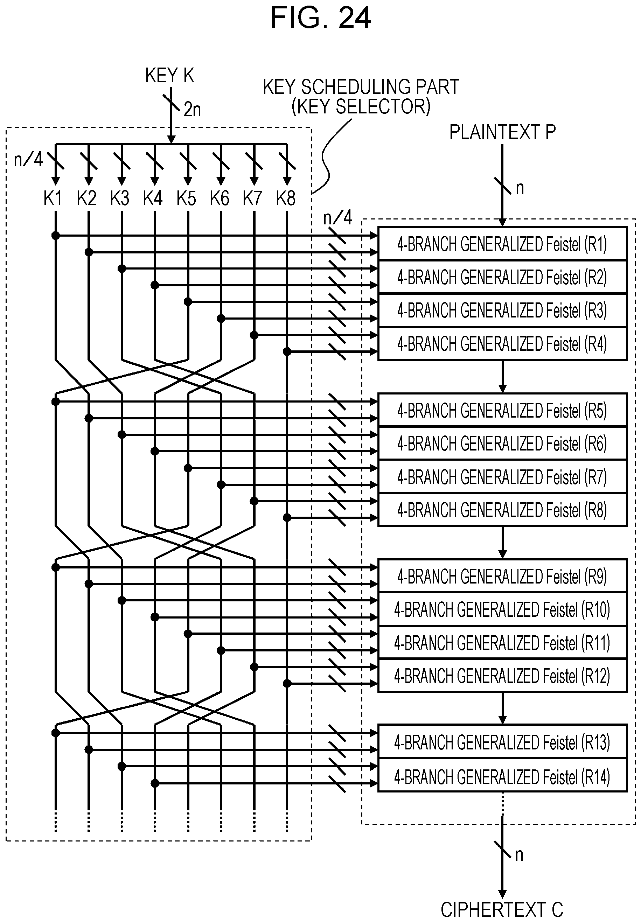

An example of this configuration is illustrated in Fig. 24.

The supply processing of round keys as illustrated in Fig. 24 will be described.

The secret key K is 2n-bit key data.

This 2n-bit secret key K is divided into eight equal parts, and eight round keys K1, K2, K3, K4, K5, K6, K7, and K8 are generated.

The eight round keys K1 through K8 are (n/4)-bit key data.

Two round keys selected from these eight round keys K1 through K8 are used in a sequence different for each unit in which one unit is four rounds.

The first four rounds as illustrated in Fig. 24: two round keys are input and applied by the following sequence regarding R1 through R4.
Round R1: round key K1 and round key K2
Round R2: round key K3 and round key K4
Round R3: round key K5 and round key K6
Round R4: round key K7 and round key K8

The next four rounds: two round keys are input and applied by the following sequence regarding R5 through R8.
Round R5: round key K5 and round key K1
Round R6: round key K2 and round key K6
Round R7: round key K7 and round key K3
Round R8: round key K4 and round key K8

The next four rounds: two round keys are input and applied by the following sequence regarding R9 through R12.
Round R9: round key K7 and round key K5
Round R10: round key K1 and round key K3
Round R11: round key K4 and round key K2
Round R12: round key K6 and round key K8

In this way, with four rounds as a unit, the round key input sequence different for each unit is applied.

Also, as a technique to further improve implementation efficiency, four units from that divided into eight parts every (n/4) bits is used in a round key RK_{r,0} regarding a left side F function, and the remaining four are used in a round key RK_{r,1} regarding a right side F function.

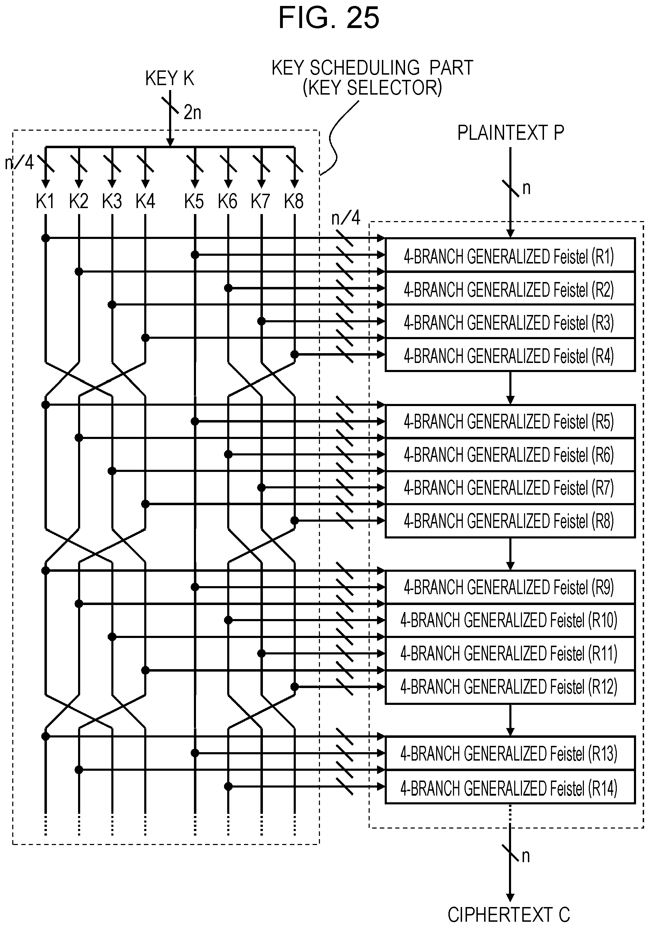

An example of this configuration is illustrated in Fig. 25.

The supply processing of round keys as illustrated in Fig. 25 will be described.

The secret key K is 2n-bit key data.

This 2n-bit secret key K is divided into eight equal parts, and eight round keys K1, K2, K3, K4, K5, K6, K7, and K8 are generated.

The eight round keys K1 through K8 are (n/4)-bit key data.

Two round keys selected from these eight round keys K1 through K8 are used in a sequence different for each unit in which one unit is four rounds.

According to this example, the round keys K1 through K4 are applied to the left side F function in each round regarding the Feistel structure with 4 data lines, and the round keys K5 through K8 are applied to the right side F function for each round regarding the Feistel structure with 4 data lines.

The first four rounds as illustrated in Fig. 25: two round keys are input and applied by the following sequence regarding R1 through R4.
Round R1: round key K1 and round key K5
Round R2: round key K2 and round key K6
Round R3: round key K3 and round key K7
Round R4: round key K7 and round key K8

The next four rounds: two round keys are input and applied by the following sequence regarding R5 through R8.
Round R5: round key K2 and round key K5
Round R6: round key K4 and round key K8
Round R7: round key K1 and round key K6
Round R8: round key K3 and round key K7

The next four rounds: two round keys are input and applied by the following sequence regarding R9 through R12.
Round R9: round key K4 and round key K5
Round R10: round key K3 and round key K7
Round R11: round key K2 and round key K8
Round R12: round key K1 and round key K6

In this way, with four rounds as a unit, the round key input sequence different for each unit is applied.

According to the configuration illustrated in Fig. 25, instead of shuffling the input order of all eight of the round keys K1 through K8 at every unit of four rounds, four of these, that is to say,
Round keys: K1 through K4
Round keys: K5 through K8
the shuffling of the input order of these is performed in units of four round keys.

According to this configuration, the cost of the selector necessary in replacement type key scheduling parts can be further reduced.

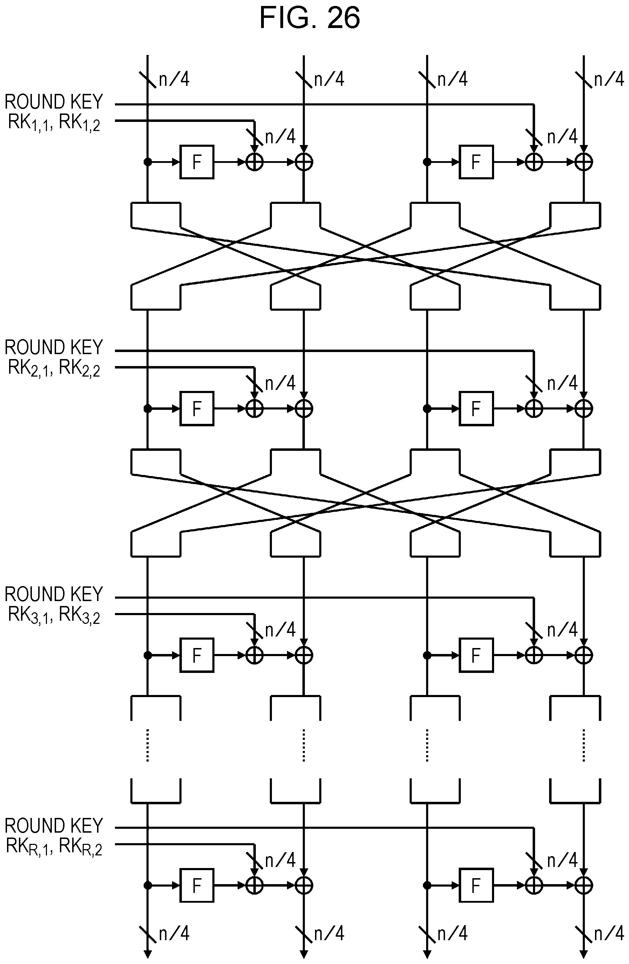

Also regarding a generalized Feistel structure with 4 data lines as illustrated in Fig. 26, for example, the key scheduling part regarding the present method is also valid for models in which the cyclic shift is modified to a round permutation (generalized Feistel+ with 4 data lines).

The model in which the cyclic shift is modified to a round permutation regarding the generalized Feistel structure with 4 data lines as illustrated in Fig. 26 (generalized Feistel+ with 4 data lines) will be described.

The basic configuration of the configuration illustrated in Fig. 26 is a configuration in which an n-bit input data is divided into a d number of units every n/d bits regarding a d-line generalized Feistel structure, wherein an F function processing and an XOR processing is performed on these units as the basic configuration, and the configuration of the calculation with the round keys is performed against the output of the F function.

At this time,
the data sequence input into the F function is designated as the F function input side data sequence,
and the data sequence used in the XOR is designated as the XOR data sequence.

The n/d-bit data transferred in each sequence (each line) is further divided again into d/2 units (in this case, the division does not have to be equal division).

The data divided again into d/2 units for each sequence (each line) is distributed according to the following rules.

(1) The F function input data sequence is always distributed to the XOR data sequence for the next round function
(2) The XOR data sequence is always distributed to the F function input data sequence for the next round function
(3) The data sequence divided into d/2 units is distributed into the data sequence for the next round function of the d/2 position without any overlap between them.

After such a distribution, the data divided into d/2 units is combined into one unit of data.

This is repeated as many times as necessary.

The key scheduling part according to the present method is also valid regarding a model (generalized Feistel+ with 4 data lines) in which this cyclic shift has been modified to a round permutation.

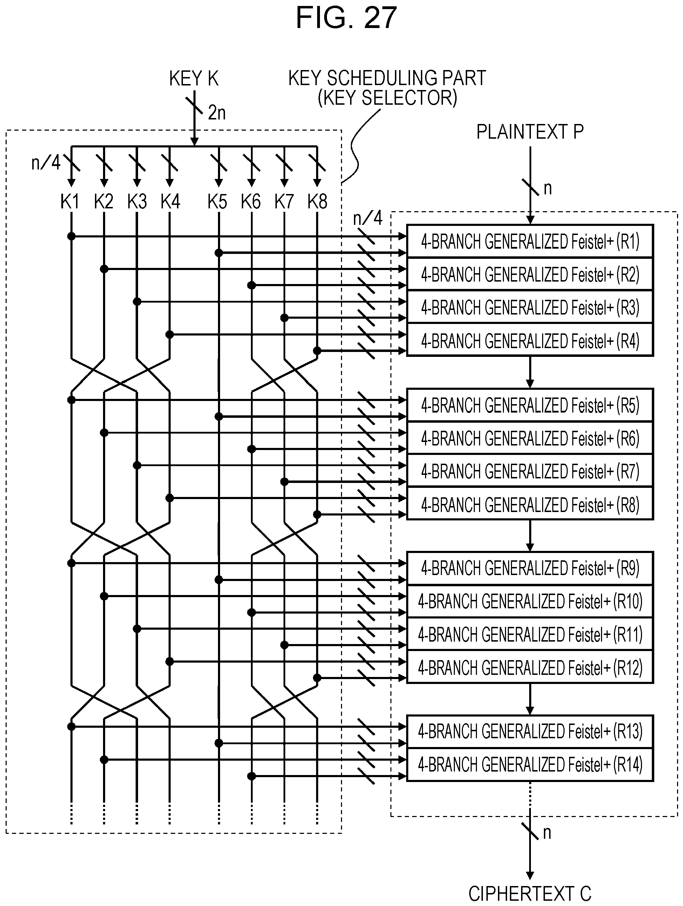

Specifically, the configuration illustrated in Fig. 27, which is a similar shuffling technique as that in Fig. 25, is a suitable example.

That is to say, four units from the secret key K divided into eight equal parts every (n/4) bits is used in a round key RK_{r, 0} regarding a left side F function, and the remaining four are used in a round key RK_{r, 1} regarding a right side F function.

The supply processing of round keys as illustrated in Fig. 27 will be described.

The secret key K is 2n-bit key data.

This 2n-bit secret key K is divided into eight equal parts, and eight round keys K1, K2, K3, K4, K5, K6, K7, and K8 are generated.

The eight round keys K1 through K8 are (n/4)-bit key data.

Two round keys selected from these eight round keys K1 through K8 are used in a sequence different for each unit in which one unit is four rounds.

According to this example, two of the round keys selected from the round keys K1 through K8 are applied to the two F functions in each round regarding the generalized Feistel+ structure with 4 data lines in which the cyclic shift has been modified to a round permutation.

The first four rounds as illustrated in Fig. 27: two round keys are input and applied by the following sequence regarding R1 through R4.
Round R1: round key K1 and round key K5
Round R2: round key K2 and round key K6
Round R3: round key K3 and round key K7
Round R4: round key K7 and round key K8

The next four rounds: two round keys are input and applied by the following sequence regarding R5 through R8.
Round R5: round key K2 and round key K5
Round R6: round key K4 and round key K8
Round R7: round key K1 and round key K6
Round R8: round key K3 and round key K7

The next four rounds: two round keys are input and applied by the following sequence regarding R9 through R12.
Round R9: round key K4 and round key K5
Round R10: round key K3 and round key K7
Round R11: round key K2 and round key K8
Round R12: round key K1 and round key K6

In this way, with four rounds as a unit, the round key input sequence different for each unit is applied.

Next, an example configuration is illustrated for a replacement type key scheduling part in a case when the bit length of the secret key is not an integral multiple of the bit length of the round keys necessary for one round.

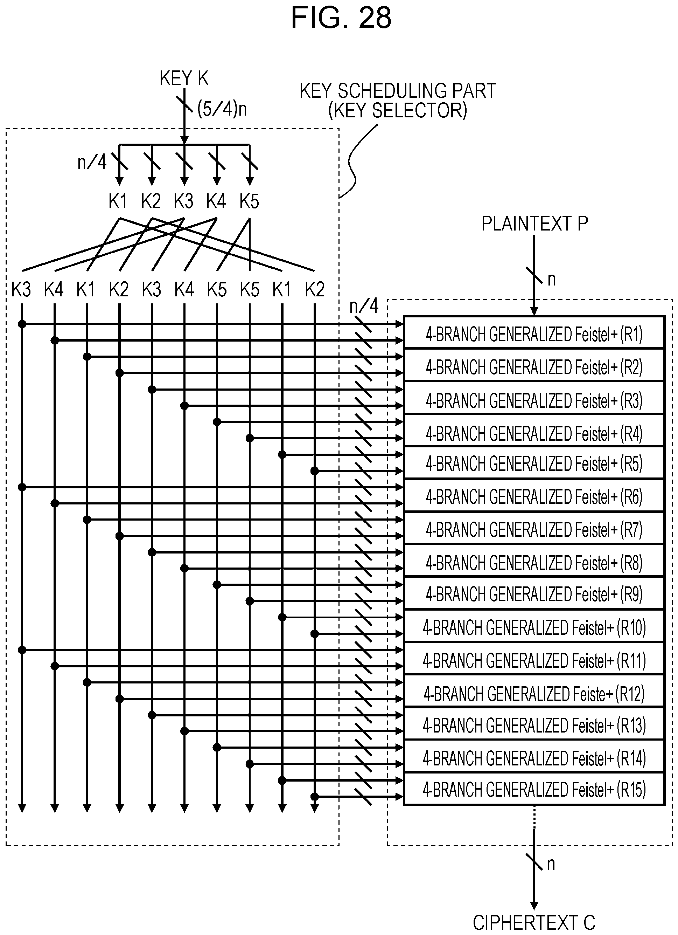

For example, Fig. 28 illustrates a configuration method of a key scheduling part when the secret key is (5n/4) bits, and the round keys necessary for one round are (n/2) bits.

According to this configuration, first a replacement and expansion of this is performed so that this becomes an integral multiple of the bit length of the round keys necessary for one round. Afterwards, a configuration is taken in which this is supplied in order.

The supply processing of the round keys as illustrated in Fig. 28 will be described.

The secret key K is (5/4)n-bit key data.

First, the replacement type key scheduling part generates five round keys K1, K2, K3, K4, and K5 equivalent to the bit length of the round key on the basis of this (5/4)n-bit key data.

Two round keys selected from these round keys K1 through K5 are applied to two F functions input as the round keys applied to each round.

The first FIVE rounds as illustrated in Fig. 28: two round keys are input and applied by the following sequence regarding R1 through R5.
Round R1: round key K3 and round key K4
Round R2: round key K1 and round key K2
Round R3: round key K3 and round key K4
Round R4: round key K5 and round key K5
Round R5: round key K1 and round key K2

Regarding the next five rounds: R6 through R10 and the following five rounds: R11 through R15, two round keys are input and applied by a similar sequence.

A detailed description of the previously described advantage "(Advantage 3) Improvement in the Level of Security by Changing the Replacement Method of the Round Key" will be performed.

First, definitions of a difference probability, an active F function, and a minimum active F function number will be performed.

Difference attacks are attacks which use that propagating from some input difference to some output difference with a high probability. That is to say, when considering security, it is necessary to indicate combinations of input differences and output differences that do not contain that which is propagated with a high probability.

Related key difference attacks are similar attacks which use that propagating from some input different and some secret key difference to some output difference with a high probability. That is to say, when considering security, it is necessary to indicate combinations of input differences, secret key differences, and output differences that do not contain that which is propagated with a high probability. Such a probability of some input difference propagating to some output difference, and a probability of some input difference and some secret key difference propagating to some output difference, are the definitions of the difference probability. As previously described, there is that in which this difference probability regarding GOST is one.

Such a difference probability is known to decrease only by a non-linear function (F function) to which a non-zero input difference is provided. The non-linear function (F function) to which this non-zero input difference is provided is the definition of the active F function. The number of active F functions is closely related to the level of security against difference attacks, and so it can be thought that if there many active F functions regarding some input difference, this will be sufficiently secure.

The number of active F functions can be determined if one input difference is determined. From that just described, it is understood that it needs to be determined how many active F functions should be indicated depending on the kind of input difference provided when considering security against difference attacks. The minimum value of the number of active F functions regarding each kind of such input differences is the definition of the minimum active F function number.

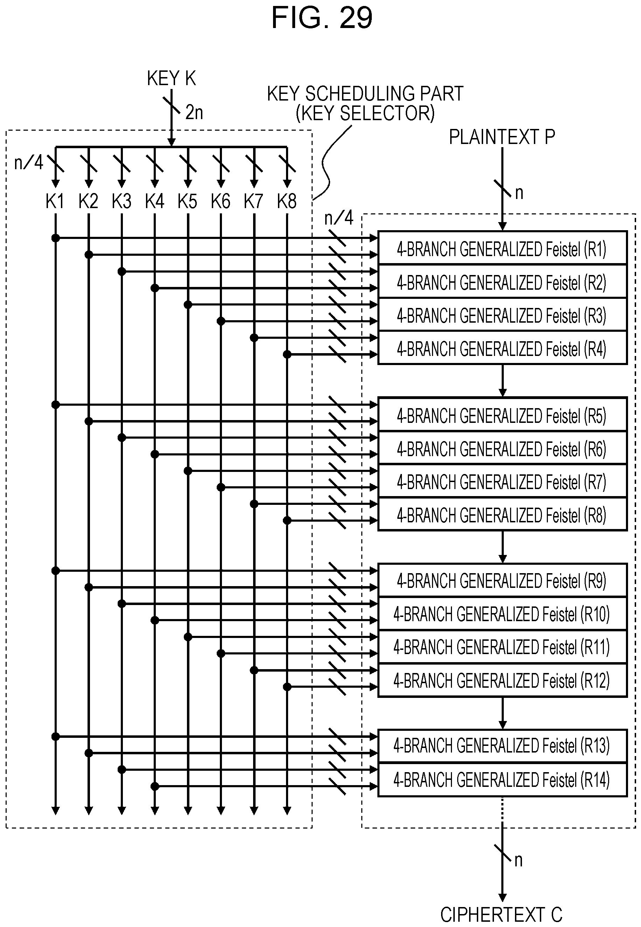

For example, regarding the generalized Feistel structure with 4 data lines in which the output of the F function on the round keys is used in the XOR as illustrated in Fig. 20, the following (Table 1) illustrates the minimum active F function number corresponding to the number or rounds after consideration of the related key difference when the method according to the related art is adopted such that the round keys are simply input in order as illustrated in Fig. 29.

**[Table 1]**

| Round Number | Minimum Active F Function Number | Round Number | Minimum Active F Function Number |
|---|---|---|---|
| 1 | 0 | 16 | 4 |
| 2 | 0 | 17 | 4 |
| 3 | 0 | 18 | 4 |
| 4 | 0 | 19 | 4 |
| 5 | 0 | 20 | 5 |
| 6 | 1 | 21 | 5 |
| 7 | 1 | 22 | 5 |
| 8 | 2 | 23 | 5 |
| 9 | 2 | 24 | 6 |
| 10 | 2 | 25 | 6 |
| 11 | 2 | 26 | 6 |
| 12 | 3 | 27 | 6 |
| 13 | 3 | 28 | 7 |
| 14 | 3 | 29 | 7 |
| 15 | 3 | 30 | 7 |

In the case of this method, it is understood, for example, that there needs to be at least 28 rounds for an encryption in which the number of active F functions necessary to ensure security against related key difference attacks is seven.

A processing according to the present disclosure as illustrated in Fig. 24, for example, in a generalized Feistel structure with 4 data lines such as that illustrated in Fig. 20, that is to say, regarding a replacement type key scheduling part, (Table 2) illustrates the corresponding minimum active F function number and number of rounds in consideration of the related key difference regarding a configuration in which processing to change the input key sequence is performed at a predetermined round unit.

**[Table 2]**

| Round Number | Minimum Active F Function Number | Round Number | Minimum Active F Function Number |
|---|---|---|---|
| 1 | 0 | 16 | 7 |
| 2 | 0 | 17 | 8 |
| 3 | 0 | 18 | 8 |
| 4 | 0 | 19 | 9 |
| 5 | 0 | 20 | 9 |
| 6 | 0 | 21 | 10 |
| 7 | 1 | 22 | 11 |
| 8 | 1 | 23 | 11 |
| 9 | 2 | 24 | 12 |
| 10 | 3 | 25 | 12 |
| 11 | 4 | 26 | 12 |
| 12 | 4 | 27 | 13 |
| 13 | 5 | 28 | 14 |
| 14 | 6 | 29 | 15 |
| 15 | 7 | 30 | 16 |

According to the previously described Table 2, it is understood that at least 15 rounds are necessary for an encryption in which the number of active F functions necessary to ensure security against related key difference attacks, for example, is seven.

According to the previous Table 1, at least 28 rounds are necessary for an encryption in which the number of active F functions necessary to ensure security against related key difference attacks is seven.

The processing according to the present disclosure, that is to say, regarding the replacement type key scheduling part, it is understood that the number of rounds has been reduced by 13 in comparison to the method of the related art by implementing a configuration in which the processing to change the input key sequence is performed at a predetermined round unit.

In this way, the processing according to the present disclosure, that is to say, regarding the replacement type key scheduling part, it is understood that a larger number of active F functions can be ensured over the method of the related art, which does not perform this kind of key shuffling, by implementing a configuration in which the processing to change the input key sequence is performed at a predetermined round unit.

Similarly, let us consider a model of a generalized Feistel+ structure with 4 data lines as illustrated in Fig. 26 in which the cyclic shift in the generalized Feistel structure with 4 data lines is modified to a round permutation.

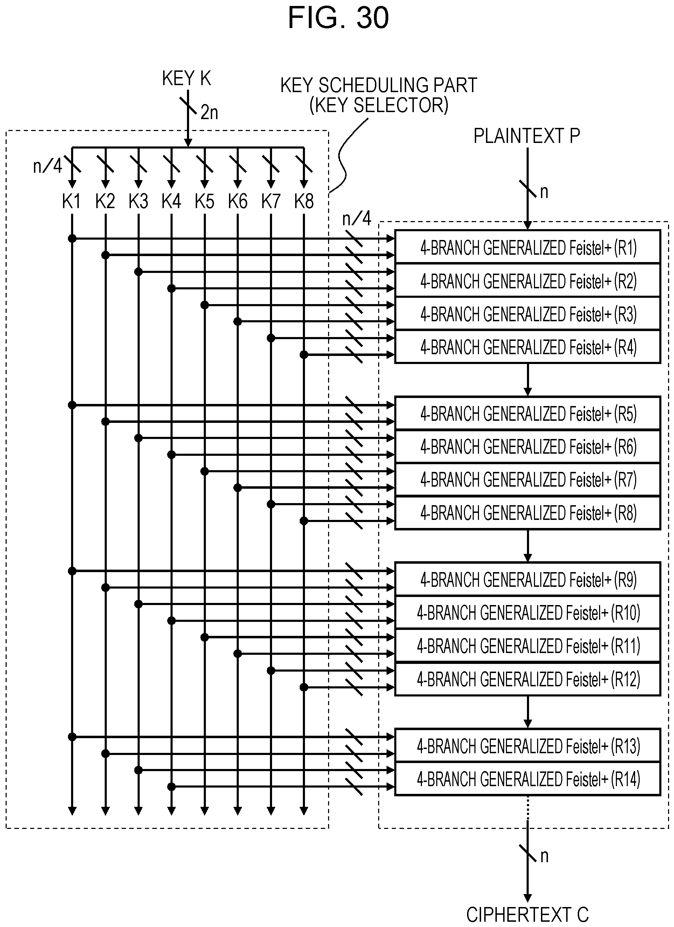

When adopting the method of the related art in which the round keys are simply input in order (Fig. 30) regarding this configuration, the corresponding minimum active F function number and the number of rounds in consideration of related key differences are the same values as in the previously described (Table 1).

In the case of this method, it is understood that at least 28 rounds are necessary for an encryption in which the number of active F functions necessary to ensure security against related key difference attacks, for example, is seven.

Also, regarding a case in which the configuration of the key scheduling part is implemented according to the present invention as illustrated in Fig. 24 in a generalized Feistel+ structure with 4 data lines such as that illustrated in Fig. 26, the following (Table 3) illustrates the corresponding minimum active F function number and the number of rounds with consideration to related key differences.

**[Table 3]**

| Round Number | Minimum Active F Function Number | Round Number | Minimum Active F Function Number |
|---|---|---|---|
| 1 | 0 | 16 | 7 |
| 2 | 0 | 17 | 8 |
| 3 | 0 | 18 | 9 |
| 4 | 0 | 19 | 10 |
| 5 | 0 | 20 | 10 |
| 6 | 0 | 21 | 11 |
| 7 | 0 | 22 | 12 |
| 8 | 1 | 23 | 12 |
| 9 | 3 | 24 | 13 |
| 10 | 3 | 25 | 14 |
| 11 | 4 | 26 | 15 |
| 12 | 5 | 27 | 15 |
| 13 | 5 | 28 | 16 |
| 14 | 6 | 29 | 17 |
| 15 | 7 | 30 | 17 |

According to the previously described Table 3, it is understood that at least 15 rounds are necessary for an encryption in which the number of active F functions necessary to ensure security against related key difference attacks, for example, is seven.

According to the previous Table 1, at least 28 rounds are necessary for an encryption in which the number of active F functions necessary to ensure security against related key difference attacks is seven.

The processing according to the present disclosure, that is to say, regarding the replacement type key scheduling part, it is understood that the number of rounds has been reduced by 13 in comparison to the method of the related art by implementing a configuration in which the processing to change the input key sequence is performed at a predetermined round unit.

In this way, the processing according to the present disclosure, that is to say, regarding the replacement type key scheduling part, it is understood that a larger number of active F functions can be ensured over the method of the related art, which does not perform this kind of key shuffling, by implementing a configuration in which the processing to change the input key sequence is performed at a predetermined round unit, and an encryption processing configuration with high security can be realized with few rounds.

### [5. Various Configuration Examples of Key Replacement Type of Key Scheduling Parts (Variation)]

Next, various configuration examples of key replacement type key scheduling parts (variation) will be described.

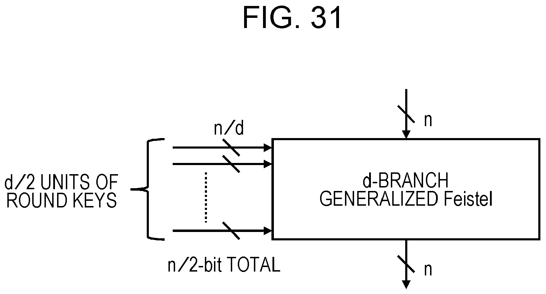

Regarding an n-bit block encryption having a generalized Feistel structure with d data lines in which d designates the number of divisions, the number of (n/d)-bit round keys generally used for one round is (d/2) units as illustrated in Fig. 31.

Therefore, the total for one round
(n/d) × (d/2)
= (n/2)-bit round key data is necessary.

For example, when applying the generalized Feistel structure with 4 data lines (d = 4) as illustrated in the previously described Fig. 18, it is necessary to input two (n/4)-bit round keys each at each round unit to implement the round key input processing.

The generation and input of the round key as described below are executed depending on the length of the secret key forming the basis to generate the round keys.

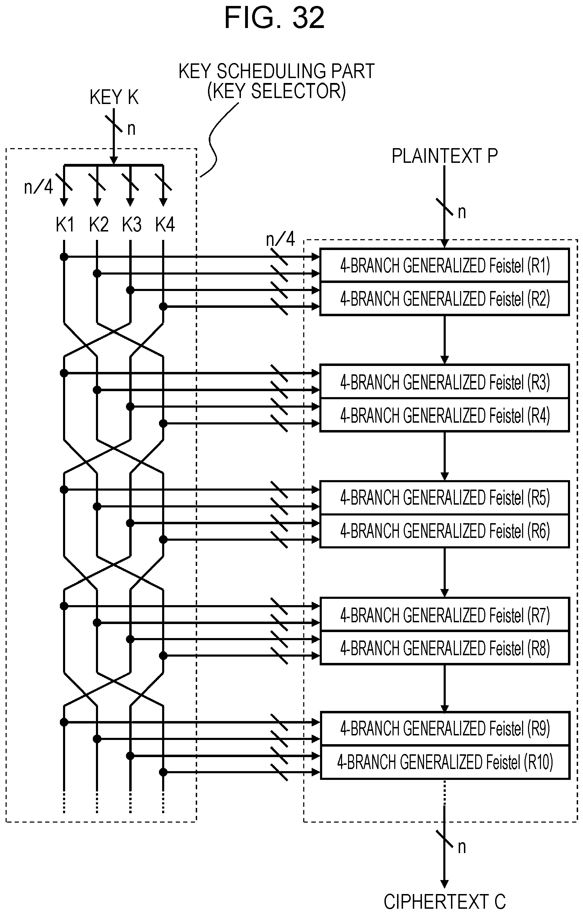

When the secret key is n bits, n/4-bit round keys are generated by dividing the n-bit secret key into four equal parts, and two each are input for each round as illustrated in Fig. 32, for example.

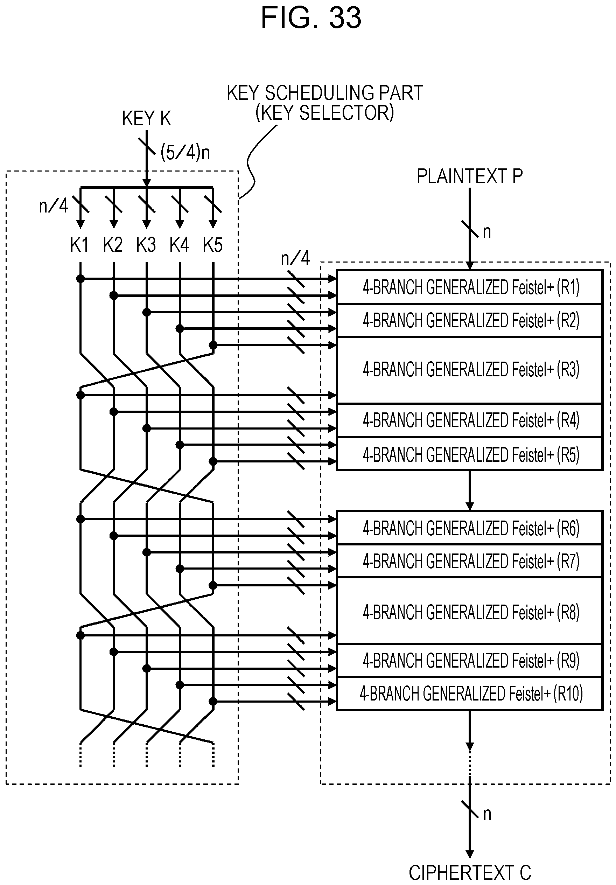

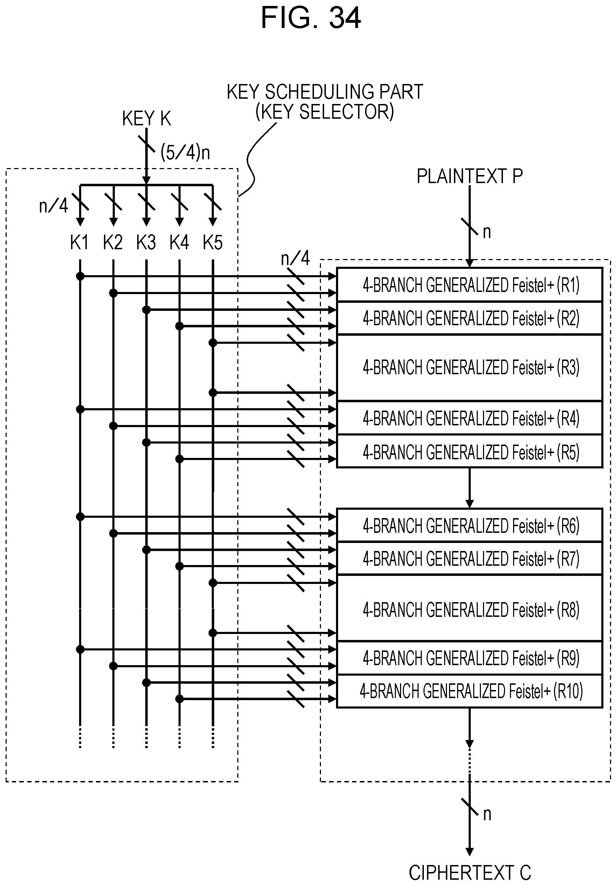

When the secret key is (5/4)n bits, n/4-bit round keys are generated by dividing the n-bit secret key into five equal parts, and two each are input for each round as illustrated in Fig. 33 and Fig. 34, for example.

For example, key replacement is performed every two rounds regarding a configuration using four round keys K1, K2, K3, and K4 from the division of the secret key of n bits into four equal parts as illustrated in Fig. 32, that is to say, the key supply sequence is changed every two rounds.

The supply processing of round keys as illustrated in Fig. 32 will be described.

The secret key K is n-bit key data.

Four round keys K1, K2, K3, and K4 are generated by dividing this n-bit secret key K into four equal parts.

The four round keys K1, K2, K3, and K4 are (n/4)-bit key data.

These four round keys K1, K2, K3, and K4 are used in sequences which are different at each unit in which one unit is four rounds.

The first two rounds as illustrated in Fig. 21: two of the round keys K1 through K4 are input and applied by the following sequence regarding R1 through R2.
Round R1: round key K1 and round key K2
Round R2: round key K3 and round key K4

The next two rounds: the round keys K1 through K4 are input and applied by the following sequence regarding R3 through R4.
Round R3: round key K3 and round key K1
Round R4: round key K4 and round key K2

The next two rounds: the round keys K1 through K4 are input and applied by the following sequence regarding R5 through R6.
Round R5: round key K4 and round key K3
Round R6: round key K2 and round key K1

The next two rounds: the round keys K1 through K4 are input and applied by the following sequence regarding R7 through R8.
Round R7: round key K2 and round key K4
Round R8: round key K1 and round key K3

The next two rounds: the round keys K1 through K4 are input and applied by the following sequence regarding R9 through R10.
Round R9: round key K1 and round key K2
Round R10: round key K3 and round key K4

Also, regarding a configuration as illustrated in Fig. 33 using five round keys K1, K2, K3, K4, and K5 from the five equal parts when dividing the secret key K of (5/4)n bits, as key replacement is performed after five key selections of these five keys K1 through K5, two key replacements are performed over five rounds. That is to say, the key supply sequence is changed twice every five rounds.

The supply processing of round keys as illustrated in Fig. 33 will be described.

The secret key K is (5/4)n-bit key data.

First, the replacement type key scheduling part generates the five round keys K1, K2, K3, K4, and K5 corresponding to the bit length of the round key based on this (5/4)n-bit key data.

Two round keys selected from these round keys K1 through K5 are applied to two F functions as the input of round keys applied to each round.

The first five rounds as illustrated in Fig. 33: two round keys are input and applied by the following sequence regarding R1 through R5
Round R1: round key K1 and round key K2
Round R2: round key K3 and round key K4
Round R3: round key K5 and round key K5
Round R4: round key K2 and round key K3
Round R5: round key K3 and round key K4

The next five rounds: two round keys are input and applied by a similar sequence regarding R6 through R10.

Further, the key supply sequence regarding the key supply processing configuration illustrated in Fig. 33 produces the same result as that described regarding Fig. 28.

That is to say, in either case the key supply is performed in an order of K1, K2, K3, K4, K5, K5, K5, K1, K2, K3, ....

In this way, regarding the key supply processing for the replacement type key scheduling part, the configuration may perform a processing to change the key selection sequence without performing more than two key replacements regarding a setting which the number of necessary key replacements is m' (>1) for an m number of rounds, for example.

For example, the key supply processing sequence illustrated in Fig. 33 and the key supply processing sequence illustrated in Fig. 34 is exactly the same.

That is to say, the first five rounds: two round keys are input and applied by the following sequence regarding R1 through R5.
Round R1: round key K1 and round key K2
Round R2: round key K3 and round key K4
Round R3: round key K5 and round key K5
Round R4: round key K2 and round key K3
Round R5: round key K3 and round key K4

The next five rounds: two round keys are input and applied by a similar sequence regarding R6 through R10.

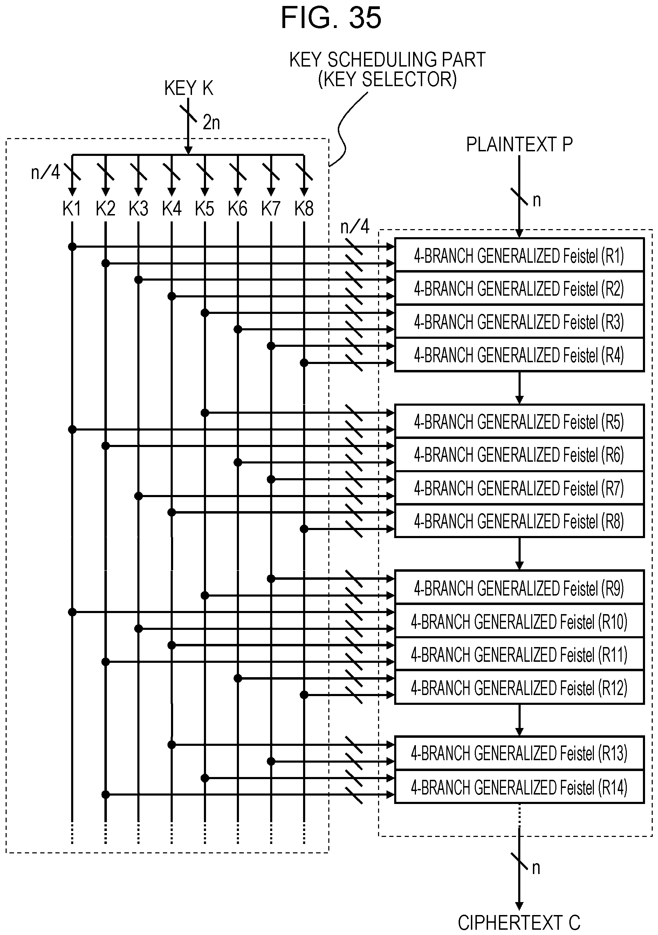

Also, instead of shuffling the divided key supply order and inputting these in order into the round function as the key replacement processing, the exact same effect can be obtained by changing the selection order in units of multiple rounds. For example, the round key supply configuration previously described with reference to Fig. 24 and the key supply processing sequence illustrated in Fig. 35 is exactly the same.

That is to say, the first four rounds: two round keys are input and applied by the following sequence regarding R1 through R4.
Round R1: round key K1 and round key K2
Round R2: round key K3 and round key K4
Round R3: round key K5 and round key K6
Round R4: round key K7 and round key K8

The next four rounds: two round keys are input and applied by the following sequence regarding R5 through R8.
Round R5: round key K5 and round key K1
Round R6: round key K2 and round key K6
Round R7: round key K7 and round key K3
Round R8: round key K4 and round key K8

The next four rounds: two round keys are input and applied by the following sequence regarding R9 through R12.
Round R9: round key K7 and round key K5
Round R10: round key K1 and round key K3
Round R11: round key K4 and round key K2
Round R12: round key K6 and round key K8

In this way, the round key supply configuration described with reference to Fig. 24 and the key supply processing sequence illustrated in Fig. 35 are configurations that apply different round key input sequences at each unit in which one unit is four rounds.

### (Multiple Types of Key Replacements)

According to the configuration previously described with reference to Fig. 24, the same form of key replacement is performed every four rounds when the key length is 2n bits and divided into eight equal parts.

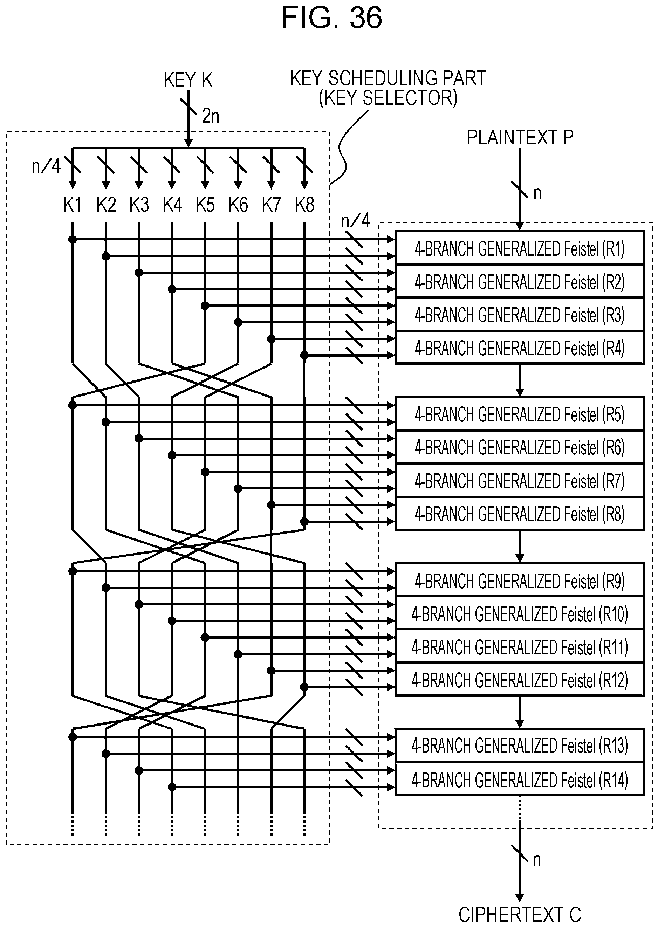

Conversely, the replacement processing executed at 4-round units may set to be of a different form every time such as with that illustrated in Fig. 36, for example.

The key supply sequence according to the configuration illustrated in Fig. 36 is as follows. The first four rounds: two round keys are input and applied by the following sequence regarding R1 through R4.
Round R1: round key K1 and round key K2
Round R2: round key K3 and round key K4
Round R3: round key K5 and round key K6
Round R4: round key K7 and round key K8

The next four rounds: two round keys are input and applied by the following sequence regarding R5 through R8.
Round R5: round key K5 and round key K1
Round R6: round key K2 and round key K6
Round R7: round key K7 and round key K3
Round R8: round key K4 and round key K8

The next four rounds: two round keys are input and applied by the following sequence regarding R9 through R12.
Round R9: round key K8 and round key K5
Round R10: round key K7 and round key K3
Round R11: round key K1 and round key K2
Round R12: round key K4 and round key K6

In this way, the key supply sequence illustrated in Fig. 36 is the same as the key supply sequence illustrated in Fig. 24 up to rounds 1 through 4 and rounds 5 through 8, but the sequence is different from round 9.

This is because though the key replacement executing by the replacement type key scheduling part regarding the setting illustrated in Fig. 24, that is to say, the key shuffling processing is a configuration executed at the same setting at 4-round units, but according to the configuration illustrated in Fig. 36, the key replacement by the replacement type key scheduling part, that is to say, the key shuffling processing is executed at a different setting at 4-rounds units.

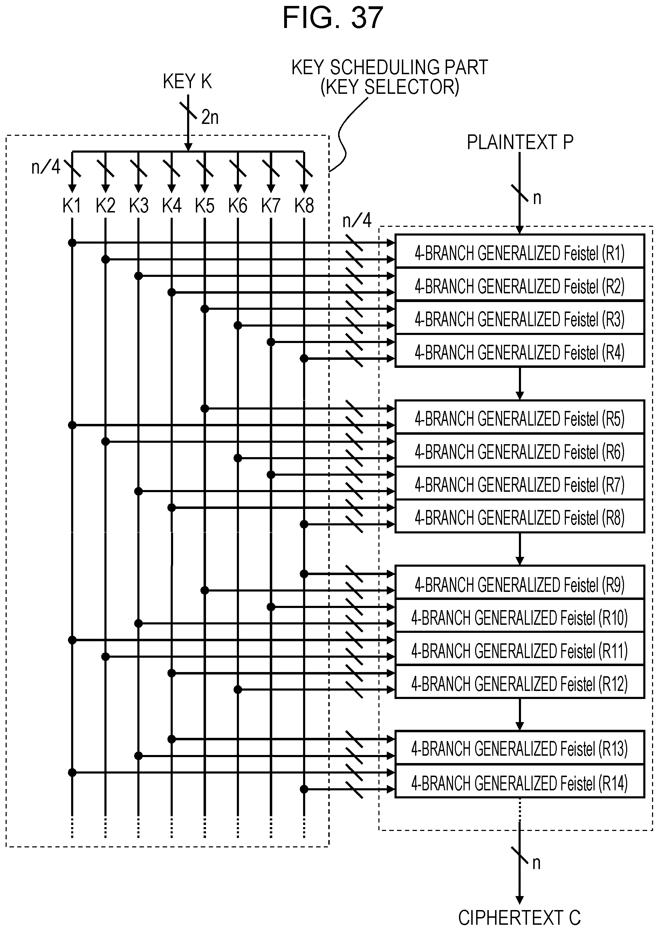

Also, instead of shuffling the order of the divided keys and inputting these in order into the round functions, a similar effect can be obtained by changing the selection sequence of keys. For example, the round key supply configuration previously described with reference to Fig. 36 and the key supply processing sequence illustrated in Fig. 37 is exactly the same.

### (Portional Selections of Keys)

As previously described, according to the configurations illustrated in Fig. 24 and Fig. 36, eight keys divided into eight equal parts are input one at a time during four rounds.

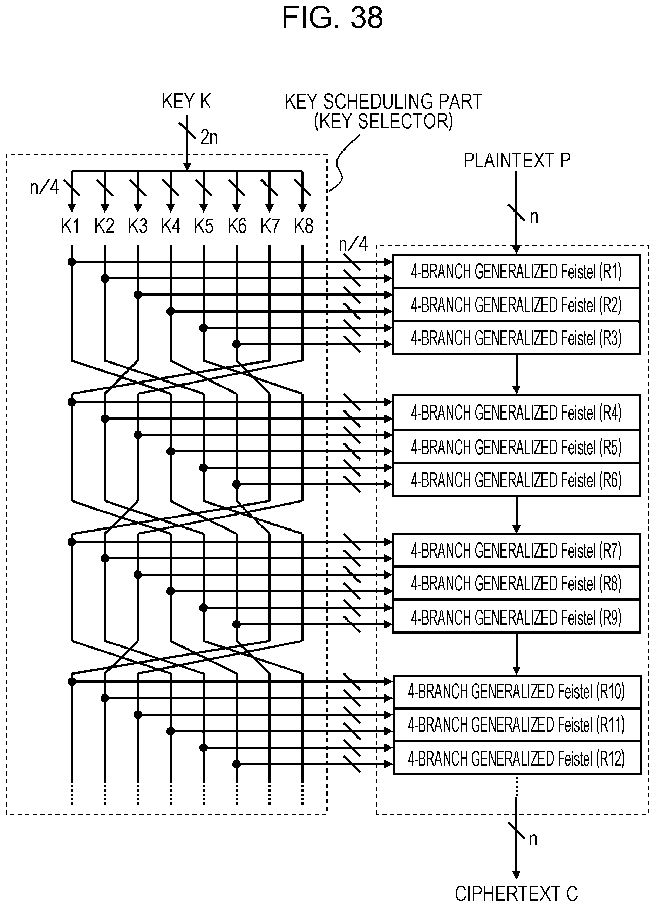

A configuration using only six keys over three rounds performing replacement every three rounds as illustrated in Fig. 38 is also possible.

The key supply sequence according to the configuration illustrated in Fig. 38 is as follows. The first three rounds: two round keys are input and applied by the following sequence regarding R1 through R3.
Round R1: round key K1 and round key K2
Round R2: round key K3 and round key K4
Round R3: round key K5 and round key K6

The next three rounds: two round keys are input and applied by the following sequence regarding R4 through R6.
Round R4: round key K7 and round key K3
Round R5: round key K8 and round key K1
Round R6: round key K2 and round key K4

The next three rounds: two round keys are input and applied by the following sequence regarding R7 through R9.
Round R7: round key K6 and round key K8
Round R8: round key K5 and round key K7
Round R9: round key K3 and round key K1

The next three rounds: two round keys are input and applied by the following sequence regarding R10 through R12.
Round R10: round key K4 and round key K5
Round R11: round key K2 and round key K6
Round R12: round key K8 and round key K7

This example designates a configuration in which the same pattern of key replacement is repeated at 3-round units.

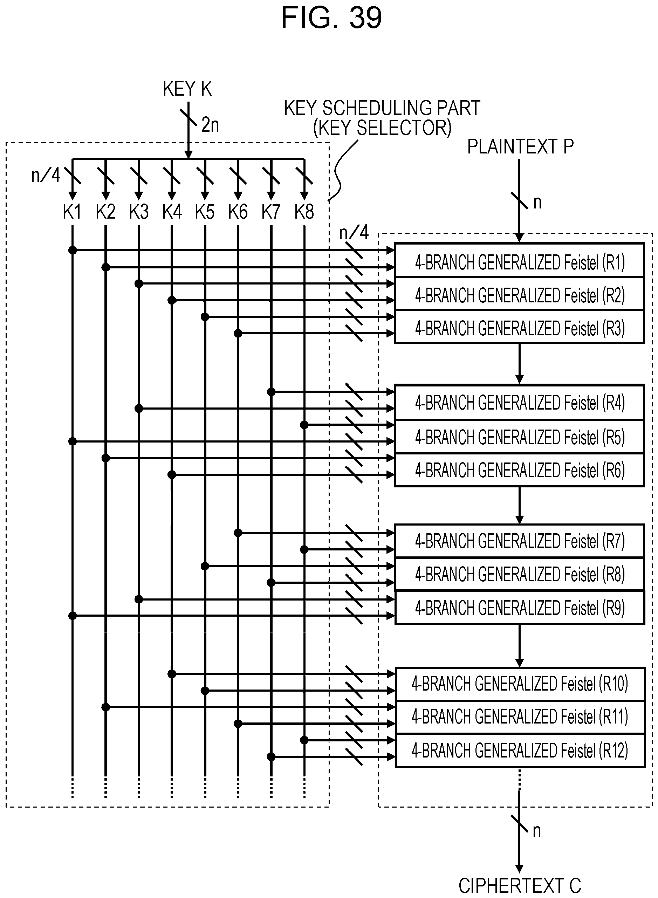

Also, instead of shuffling the order of keys, and inputting these in order into the round functions, exactly the same effect can be obtained by changing the selection sequence of keys. For example, the round key supply configuration described with reference to Fig. 38, for example, is exactly the same as the key supply processing sequence illustrated in Fig. 39.

### (Implementation Efficiency)

The round key supply method according to the present disclosure is similar to the method according to the related art in that the implementation efficiency is high as the processing executed is that by a replacement type key scheduling part.

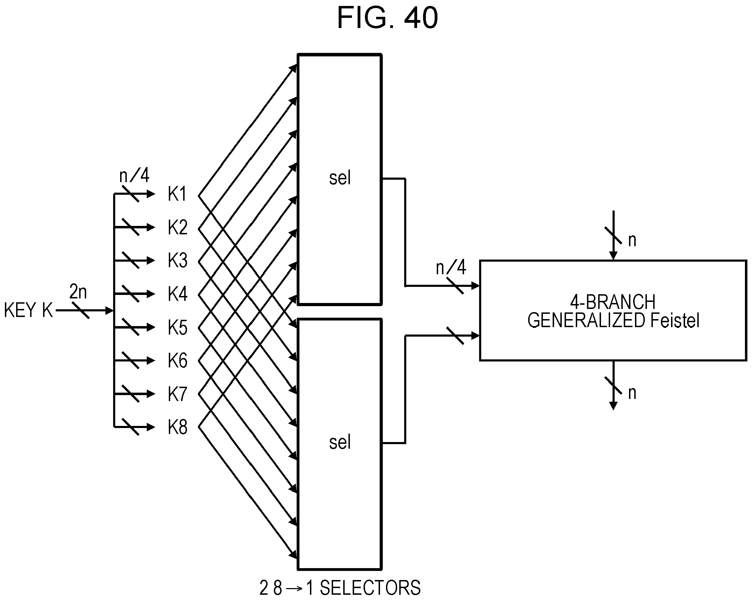

For example, as illustrated in Fig. 40, when the length of the secret key K forming the basis to generate the round keys is 2n bits, two round keys are selected every round from the keys K1 through K8 from the eight key parts.

Here, two of the keys K1 through K8 are classified as that regarding the previously described Fig. 27,
K1, K2, K3, and K4
K5, K6, K7, and K8
Two groups of four of these round keys are set,
and so the implementation efficiency of certain implementation forms can be further improved by implementing a configuration in which key replacement in units of a predetermined round number, that is to say, the changing of key supply sequences is performed by units of these groups.

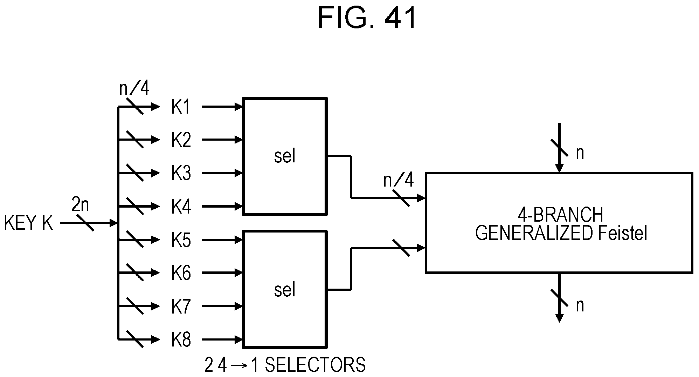

Specifically, as illustrated in Fig. 41, a configuration including two selectors of replacement type key scheduling part is designated, and the groups of the four previously described round keys, regarding each selector, that is to say,
K1, K2, K3, and K4
K5, K6, K7, and K8
a configuration in which the selection of output keys from the group of these round keys is executed is designated.

When designing a key scheduling part such as that previously described regarding Fig. 24, two selectors for selecting one from eight as in Fig. 40 are necessary, but by implementing a configuration of a replacement type key scheduling part as illustrated in Fig. 27, for example, these become two small selectors for selecting one from four as in Fig. 41.

Similarly, instead of replacing all five of the five equal parts from diving the (5/4)n-bit key, the implementation efficiency is raised by designing a replacement so that selectors with an input number of three can be used.

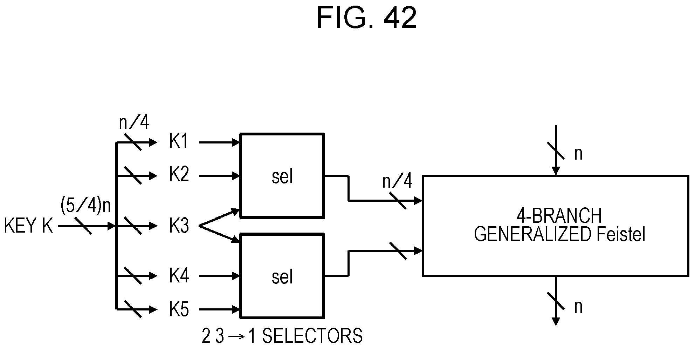

Specifically, as illustrated in Fig. 42,
n/4-bit round keys K1, K2, K, K4, and K5 are generated from the secret key K of (5/4)n bits,
is a configuration in which the first selector executes a key selection of K1, K2, and K3, and the second selector executes a key selection of K3, K4, K5.

### [6. Configuration Examples of Encryption Processing Device]

Finally, actual examples of encryption processing devices executing an encryption processing in accordance with the previously described embodiments will be described.

The encryption processing devices for executing the encryption processing in accordance with the previously described embodiments can be installed in various information processing devices executing encryption processing. Specifically, this can be used regarding various crises in which encryption processing is executed along with data processing and communication processing by devices such as PCs, TVs, recorders, players, communication devices, RFIDs, smart cards, sensor network devices, battery/battery authentication modules, health and medical devices, independent network devices, etc.

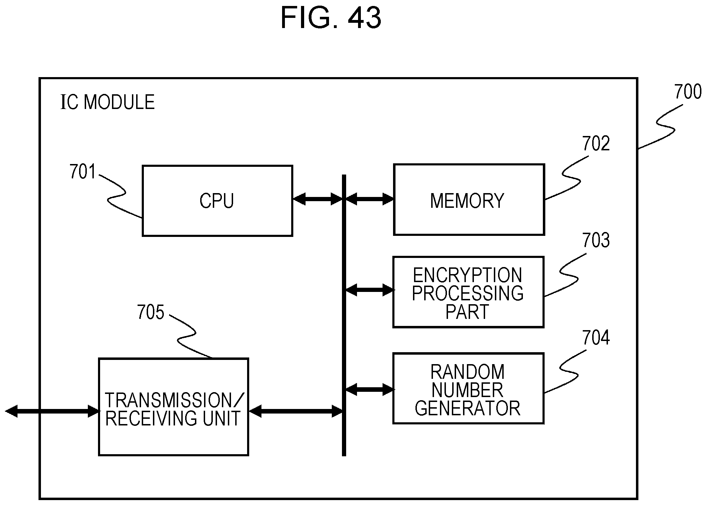

Fig. 43 illustrates an example configuration of an IC module 700 as an example of a device executing the encryption processing according to the present disclosure. The previously described processing can be executed in various information processing devices such as PCs, IC cards, reader-writers, and others, and the IC module 700 illustrated in Fig. 43 can be configured in these various devices.

A CPU (Central Processing Unit) 701 illustrated in Fig. 43 is a processor executing various programs such as the starting and termination of the encryption processing, control of data transmission and reception, data transfer control between each configuration element, and others. A memory 702 is made up from ROM (Read Only Memory) storing fixed data such as the program executed by the CPU 701, calculation parameter, and so on, and RAM (Random Access Memory) used as a work region and storage area of the program executed regarding the processing of the CPU 701 and parameters that arbitrarily change during the processing of the program. Also, the memory 702 can be used as a storage region for data and such applied to conversion matrices and conversion tables (replacement tables) applied during the encryption processing, and for key data necessary during encryption processing. Further, the data storage region is desirably configured as memory having a tamper-resistant structure.

An encryption processing part 703 executes encryption processing and decryption processing in accordance with the shared key block encryption processing algorithm applying the previously described encryption processing configurations, that is to say for example, generalized Feistel structures or Feistel structures.

Further, examples illustrated here used encryption processing means as individual models, instead of provisioning these kinds of independent encryption processing modules, a configuration can be implemented in which an encryption processing program can be stored in ROM, for example, and the CPU 701 reads out and executes the program stored in ROM.

A random number generator 704 executes random number generation processing necessary during the generation of keys necessary during encryption processing.

A transmission/reception unit 705 is a data communication processing unit executing data communication with external devices, executes data communication with IC modules such as reader-writers, for example, and executes the output of ciphertext generated within the IC module, the input of data from external reader-writers and so on among others.

Further, the encryption processing device described in the previously described embodiments is not only applicable to encryption processing to encrypt plaintext as input data, but is also applicable to decryption processing to decode the ciphertext as input data back to plaintext.

Regarding both processing, the encryption processing and the decryption processing, the configurations described in the previous embodiments can be applied.

### [7. Conclusion of Configuration of the Present Disclosure]

Thus, embodiments of the present disclosure have been described in detail with reference to specific embodiments. However, it will be apparent to those skilled in the art that various modifications and substitutions of the embodiments may be made without departing from the scope and spirit of the present disclosure. That is to say, the present invention has been disclosed exemplarily by embodiments, and should not interpreted restrictively. The Claims should be referenced in order to determine the scope of the present disclosure.

Further, the technologies disclosed in the present specification can take the following configurations.
(1) An encryption processing device comprising:
   an encryption processing part configured to divide configuration bits of data to be data processed into a plurality of lines, and to input, and to repeatedly execute data conversion processing applying a round function to each line of data as a round calculation; and
   a key scheduling part configured to output round keys to a round calculation executing unit in the encryption processing part;
   wherein the key scheduling part is a replacement type key scheduling part configured to generate a plurality of round keys or round key configuration data by dividing a secret key stored beforehand into a plurality of parts;
   and wherein the plurality of round keys or plurality of round keys generated from a combination of the round key configuration data are output to a round calculation executing unit sequentially executing in the encryption processing part such that a constant sequence is not repeated.
(2) The encryption processing device according to (1), wherein the key scheduling part changes the input sequence of the multiple round keys corresponding to the round calculation executing unit at units of multiple rounds regarding the round calculation executing unit.
(3) The encryption processing device according to either (1) or (2), wherein the encryption processing part includes an F function executing unit configured to input the data divided into multiple lines and includes a non-linear conversion processing and a linear conversion processing, and a calculating unit configured to execute calculations applying the round keys against the output of the F function executing unit.
(4) The encryption processing device according to any one of (1) through (3), wherein the key scheduling part divides a secret key stored beforehand into multiple parts, and generates multiple round keys having the same number of bits as the round key input into the round calculation executing unit.
(5) The encryption processing device according to any one of (1) through (4), wherein the key scheduling part divides a secret key stored beforehand into multiple parts, and generates multiple round keys having a smaller number of bits as the round key input into the round calculation executing unit, and performs multiple combinations of the multiple round key configuration data, and generates a round key having the same number of bits as the round key input into the round calculation executing unit.
(6) The encryption processing device according to any one of (1) through (5), wherein the key scheduling part outputs juxtaposed multiple round keys that are applied in parallel to the round calculation executing unit regarding the round calculation executing unit sequentially executing in the encryption processing part.
(7) The encryption processing device according to any one of (1) through (6), wherein the key scheduling part includes at least one selector configured to perform a selection supply processing of keys corresponding to the round calculation executing unit.
(8) The encryption processing device according to any one of (1) through (7), wherein the key scheduling part sets multiple groups by classifying the multiple round keys or the round key configuration data, and performs control processing of the key supply sequence corresponding to the round calculation executing unit at units of the set groups.
(9) The encryption processing device according to any one of (1) through (8), wherein the key scheduling part includes selectors in units of the groups.
(10) The encryption processing device according to any one of (1) through (9), wherein the encryption processing part executes encryption processing to convert plaintext as the input data into ciphertext, and executes decryption processing to convert ciphertext as the input data into plaintext.

Further, the processing method executed in the previously described device and system, and the program executing this processing is included in the configuration of the present disclosure.

Also, a portion of the processing described in this specification can be executed as hardware, software, or combination of the two. When executing this processing by software, a program to which the processing sequence is recorded is installed and executed in memory within a computer assembled with specialized hardware, or the program can be installed and executed in a general-purpose computer capable of executing the various processing. For example, the program can be recorded onto a recording medium beforehand. Other than installing to the computer from the recording medium, the program can be received via a network such as a LAN (Local Area Network) or the Internet, and can be installed to a recording medium such as an internal hard disk.

Further, the various processing disclosed in this specification can not only be executed temporally as according to the disclosure, but can also be executed in parallel or individually as necessary or depending on the processing performance of the device executing the processing. Also, the system regarding the present specification is a logical combination configuration of multiple devices, and so each configuration of the devices is not limited to being housed within the same physical unit.

### Industrial Applicability

As previously described, according to an embodiment of the present disclosure, an encryption processing device with a high level of security is achieved by a supply control of round keys.

Specifically, included are an encryption processing part configured to divide and input configuration bits of data to be data processed into multiple lines, and to repeatedly execute data conversion processing applying a round function to each line of data as a round calculation, and a key scheduling part configured to output round keys to a round calculation executing unit in the encryption processing part, wherein the key scheduling part is a replacement type key scheduling part configured to generate a plurality of round keys by dividing a secret key stored beforehand into multiple parts, in which the generated multiple round keys are output to a round calculation executing unit sequentially executing in an encryption processing part at a setting such that a constant sequence is not repeated. According to the present configuration, an encryption processing configuration with a high level of security is achieved that has a high level of resistance to repeated key attacks or other attacks, for example.

### Reference Signs List

- 700: IC module
- 701: CPU (Central Processing Unit)
- 702: memory
- 703: encryption processing part
- 704: random number generator
- 705: transmission/receiving unit

## Claims

1. An encryption processing device comprising:
an encryption processing part (703) configured to divide configuration bits of data to be data processed into a plurality of lines, and to input, and to repeatedly execute data conversion processing applying a round function to each line of data as a round calculation; and
a key scheduling part configured to output round keys to a round calculation executing unit in the encryption processing part;
wherein the key scheduling part is a replacement type key scheduling part configured to generate a plurality of round keys, by dividing a secret key stored beforehand into a plurality of parts without using a non-linear function;
and wherein the plurality of round keys generated from respective ones of said plurality of divided parts, or plurality of round keys each generated from a respective concatenation of two of the plurality of divided parts, are output to a round calculation executing unit sequentially executing in the encryption processing part such that a constant sequence is not repeated, wherein the output plurality of generated round keys form a group;
wherein the key scheduling part is configured to output a plurality of groups by supplying the output plurality of generated round keys in a different sequence in each group, or outputting a plurality of round keys each generated from a different respective concatenation of two of the plurality of divided parts when keys are generated by concatenation of divided parts;
and wherein the key scheduling part is configured to perform control processing of the key supply sequence corresponding to the round calculation executing unit at units of the set groups of generated round keys.

2. The encryption processing device according to Claim 1, wherein the encryption processing part includes an F function executing unit configured to input the data divided into a plurality of lines and includes a non-linear conversion processing and a linear conversion processing, and a calculating unit configured to execute calculations applying the round keys against the output of the F function executing unit.

3. The encryption processing device according to Claim 1, wherein the key scheduling part divides a secret key stored beforehand into a plurality of parts, and generates a plurality of round keys having the same number of bits as the round key input into the round calculation executing unit.

4. The encryption processing device according to Claim 1, wherein the key scheduling part divides a secret key stored beforehand into a plurality of parts, and generates a plurality of round keys having a smaller number of bits as the round key input into the round calculation executing unit, and performs a plurality of combinations of the plurality of round key configuration data, and generates a round key having the same number of bits as the round key input into the round calculation executing unit.

5. The encryption processing device according to Claim 1, wherein the key scheduling part outputs a juxtaposed plurality of round keys that are applied to the round calculation executing unit regarding the round calculation executing unit sequentially executing in the encryption processing part.

6. The encryption processing device according to Claim 1, wherein the key scheduling part includes at least one selector configured to perform a selection supply processing of keys corresponding to the round calculation executing unit.

7. The encryption processing device according to Claim 1, wherein the key scheduling part includes individual selectors corresponding to each of the groups.

8. The encryption processing device according to Claim 1, wherein the encryption processing part executes encryption processing to convert plaintext as the input data into ciphertext, and executes decryption processing to convert ciphertext as the input data into plaintext.

9. An encryption processing method to be executed in an encryption processing device, the encryption processing method comprising:
an encryption processing step in which an encryption processing part (703) is configured to divide configuration bits of data to be data processed into a plurality of lines and input, and to repeatedly execute data conversion processing applying a round function to each line of data as a round calculation; and
a key scheduling step in which a key scheduling part is configured to output round keys to a round calculation executing unit in the encryption processing part;
wherein the key scheduling part is a replacement type key scheduling part configured to generate a plurality of round keys by dividing a secret key stored beforehand into a plurality of parts without using a non-linear function;
and wherein the plurality of round keys generated from respective ones of said plurality of divided parts, or plurality of round keys each generated from respective concatenations of two of the plurality of divided parts, are output to a round key calculation executing unit sequentially executing in the encryption processing part at a setting such that a constant sequence is not repeated, wherein the output plurality of generated round keys form a group;
wherein a plurality of groups is output by supplying the output plurality of generated round keys in a different sequence in each group, or output by supplying a plurality of round keys each generated from a different respective concatenation of two of the plurality of divided parts when keys are generated by concatenation of divided parts;
and wherein the key scheduling step comprises performing control processing of the key supply sequence corresponding to the round calculation executing unit at units of the set groups of generated round keys.

10. A program to execute encryption processing in an encryption processing device according to the method of claim 9.

11. The encryption processing device according to Claim 1, having a generalized Feistel structure comprising the encryption processing part and the key scheduling part.

12. The encryption processing device according to Claim 1, having a generalized Feistel structure with 4 data lines comprising the encryption processing part and the key scheduling part.

13. The encryption processing device according to Claim 1, having a Type-2 generalized Feistel structure comprising the encryption processing part and the key scheduling part.

14. An information processing device comprising:
a processor configured to execute a program;
memory configured to store the program;
an encryption processing part (703) configured to divide configuration bits of data to be data processed into a plurality of lines, and to input, and to repeatedly execute data conversion processing applying a round function to each line of data as a round calculation; and
a key scheduling part configured to output round keys to a round calculation executing unit in the encryption processing part;
wherein the key scheduling part is a replacement type key scheduling part configured to generate a plurality of round keys, by dividing a secret key stored beforehand into a plurality of parts without using a non-linear function;
and wherein the plurality of round keys generated from respective ones of said plurality of divided parts, or plurality of round keys each generated from a respective concatenation of two of the plurality of divided parts, are output to a round calculation executing unit sequentially executing in the encryption processing part such that a constant sequence is not repeated, wherein the output plurality of generated round keys form a group;
wherein the key scheduling part is configured to output a plurality of groups by supplying the output plurality of generated round keys in a different sequence in each group, or configured to output a plurality of round keys each generated from a different respective concatenation of two of the plurality of divided parts when keys are generated by concatenation of divided parts;
and wherein the key scheduling part is configured to perform control processing of the key supply sequence corresponding to the round calculation executing unit at units of the set groups of generated round keys.

## Patentansprüche

1. Verschlüsselungsverarbeitungsvorrichtung, umfassend:
einen Verschlüsselungsverarbeitungsteil (703), der konfiguriert ist, Konfigurationsbits von Daten, die einer Datenverarbeitung zu unterziehen sind, in mehrere Zeilen zu zerlegen und einzugeben und wiederholt eine Datenumwandlungsverarbeitung auszuführen, bei der eine Rundungsfunktion auf jede Zeile von Daten als eine Rundungsberechnung angewendet wird; und
einen Schlüsselplanungsteil, der konfiguriert ist, Rundungsschlüssel an eine Rundungsberechnungsausführungseinheit in dem Verschlüsselungsverarbeitungsteil auszugeben;
wobei der Schlüsselplanungsteil ein Schlüsselplanungsteil des Typs Ersatz ist, der konfiguriert ist, mehrere Rundungsschlüssel durch Teilen eines vorab gespeicherten geheimen Schlüssels in mehrere Teile ohne Verwendung einer nicht-linearen Funktion zu erzeugen;
und wobei die mehreren Rundungsschlüssel, die aus jeweiligen der mehreren geteilten Teile erzeugt wurden, oder mehrere Rundungsschlüssel, die jeweils aus einer jeweiligen Aneinanderreihung von zwei der mehreren geteilten Teile erzeugt wurden, an eine Rundungsberechnungsausführungseinheit, die in dem Verschlüsselungsverarbeitungsteil sequentiell ausgeführt wird, derart ausgegeben werden, dass keine gleichbleibende Sequenz wiederholt wird, wobei die ausgegebenen mehreren erzeugten Rundungsschlüssel eine Gruppe bilden;
wobei der Schlüsselplanungsteil konfiguriert ist, mehrere Gruppen durch Bereitstellen der ausgegebenen mehreren erzeugten Rundungsschlüssel in einer unterschiedlichen Sequenz in jeder Gruppe auszugeben, oder mehrere Rundungsschlüssel auszugeben, die jeweils aus einer unterschiedlichen jeweiligen Aneinanderreihung von zwei der mehreren geteilten Teile erzeugt werden, wenn Schlüssel durch Aneinanderreihung von geteilten Teilen erzeugt werden;
und wobei der Schlüsselplanungsteil konfiguriert ist, eine Steuerungsverarbeitung der Schlüsselbereitstellungssequenz entsprechend der Rundungsberechnungsausführungseinheit bei Einheiten der festgelegten Gruppen von erzeugen Rundungsschlüsseln durchzuführen.

2. Verschlüsselungsverarbeitungsvorrichtung nach Anspruch 1, wobei der Verschlüsselungsverarbeitungsteil eine F-Funktionsausführungseinheit umfasst, die konfiguriert ist, die in mehrere Zeilen geteilten Daten einzugeben, und eine nicht-lineare Umwandlungsverarbeitung und eine lineare Umwandlungsverarbeitung und eine Berechnungseinheit umfasst, die konfiguriert ist, Berechnungen auszuführen, bei denen die Rundungsschlüssel auf die Ausgabe der F-Funktionsausführungseinheit angewendet werden.

3. Verschlüsselungsverarbeitungsvorrichtung nach Anspruch 1, wobei der Schlüsselplanungsteil einen vorab gespeicherten geheimen Schlüssel in mehrere Teile teilt und mehrere Rundungsschlüssel mit derselben Anzahl an Bits wie die Rundungsschlüsseleingabe in die Rundungsberechnungsausführungseinheit erzeugt.

4. Verschlüsselungsverarbeitungsvorrichtung nach Anspruch 1, wobei der Schlüsselplanungsteil einen vorab gespeicherten geheimen Schlüssel in mehrere Teile teilt und mehrere Rundungsschlüssel mit einer kleineren Anzahl an Bits wie die Rundungsschlüsseleingabe in die Rundungsberechnungsausführungseinheit erzeugt, und mehrere Kombinationen der mehreren Rundungsschlüsselkonfigurationsdaten durchführt und einen Rundungsschlüssel mit derselben Anzahl an Bits wie die Rundungsschlüsseleingabe in die Rundungsberechnungsausführungseinheit erzeugt.

5. Verschlüsselungsverarbeitungsvorrichtung nach Anspruch 1, wobei der Schlüsselplanungsteil mehrere aneinandergefügte Rundungsschlüssel ausgibt, die auf die Rundungsberechnungsausführungseinheit in Bezug auf das sequentielle Ausführen der Rundungsberechnungsausführungseinheit in dem Verschlüsselungsverarbeitungsteil angewendet werden.

6. Verschlüsselungsverarbeitungsvorrichtung nach Anspruch 1, wobei der Schlüsselplanungsteil mindestens eine Auswahlvorrichtung umfasst, die konfiguriert ist, eine Auswahlbereitstellungsverarbeitung von Schlüsseln entsprechend der Rundungsberechnungsausführungseinheit durchzuführen.

7. Verschlüsselungsverarbeitungsvorrichtung nach Anspruch 1, wobei der Schlüsselplanungsteil einzelne Auswahlvorrichtungen entsprechend jeder der Gruppen umfasst.

8. Verschlüsselungsverarbeitungsvorrichtung nach Anspruch 1, wobei der Verschlüsselungsverarbeitungsteil eine Verschlüsselungsverarbeitung ausführt, um Klartext als die Eingabedaten in Geheimtext umzuwandeln, und eine Entschlüsselungsverarbeitung ausführt, um Geheimtext als die Eingabedaten in Klartext umzuwandeln.

9. Verschlüsselungsverarbeitungsverfahren, das in einer Verschlüsselungsverarbeitungsvorrichtung ausführbar ist, wobei das Verschlüsselungsverarbeitungsverfahren umfasst:
einen Verschlüsselungsverarbeitungsschritt, in dem ein Verschlüsselungsverarbeitungsteil (703) konfiguriert ist, Konfigurationsbits von Daten, die einer Datenverarbeitung zu unterziehen sind, in mehrere Zeilen zu zerlegen und einzugeben und wiederholt eine Datenumwandlungsverarbeitung auszuführen, bei der eine Rundungsfunktion auf jede Zeile von Daten als eine Rundungsberechnung angewendet wird; und
einen Schlüsselplanungsschritt, in dem ein Schlüsselplanungsteil konfiguriert ist, Rundungsschlüssel an eine Rundungsberechnungsausführungseinheit in dem Verschlüsselungsverarbeitungsteil auszugeben;
wobei das Schlüsselplanungsteil ein Schlüsselplanungsteil des Typs Ersatz ist, der konfiguriert ist, mehrere Rundungsschlüssel durch Teilen eines vorab gespeicherten geheimen Schlüssels in mehrere Teile ohne Verwendung einer nicht-linearen Funktion zu erzeugen;
und wobei die mehreren Rundungsschlüssel, die aus jeweiligen der mehreren geteilten Teile erzeugt wurden, oder mehrere Rundungsschlüssel, die jeweils aus jeweiligen Aneinanderreihungen von zwei der mehreren geteilten Teile erzeugt wurden, an eine Rundungsschlüsselberechnungsausführungseinheit, die in dem Verschlüsselungsverarbeitungsteil sequentiell ausgeführt wird, in einem Szenario derart ausgegeben werden, dass keine gleichbleibende Sequenz wiederholt wird, wobei die ausgegebenen mehreren erzeugten Rundungsschlüssel eine Gruppe bilden;
wobei mehrere Gruppen durch Bereitstellen der ausgegebenen mehreren erzeugten Rundungsschlüssel in einer unterschiedlichen Sequenz in jeder Gruppe ausgegeben werden, oder durch Bereitstellen mehrerer Rundungsschlüssel ausgegeben werden, die jeweils aus einer unterschiedlichen jeweiligen Aneinanderreihung von zwei der mehreren geteilten Teile erzeugt werden, wenn Schlüssel durch Aneinanderreihung von geteilten Teilen erzeugt werden;
und wobei der Schlüsselplanungsschritt ein Durchführen einer Steuerungsverarbeitung der Schlüsselbereitstellungssequenz entsprechend der Rundungsberechnungsausführungseinheit bei Einheiten der festgelegten Gruppen von erzeugen Rundungsschlüsseln umfasst.

10. Programm zum Ausführen einer Verschlüsselungsverarbeitung in einer Verschlüsselungsverarbeitungsvorrichtung gemäß dem Verfahren nach Anspruch 9.

11. Verschlüsselungsverarbeitungsvorrichtung nach Anspruch 1 mit einer verallgemeinerten Feistel-Struktur umfassend den Verschlüsselungsverarbeitungsteil und den Schlüsselungsplanungsteil.

12. Verschlüsselungsverarbeitungsvorrichtung nach Anspruch 1 mit einer verallgemeinerten Feistel-Struktur mit 4 Datenzeilen umfassend den Verschlüsselungsverarbeitungsteil und den Schlüsselungsplanungsteil.

13. Verschlüsselungsverarbeitungsvorrichtung nach Anspruch 1 mit einer verallgemeinerten Typ-2-Feistel-Struktur umfassend den Verschlüsselungsverarbeitungsteil und den Schlüsselungsplanungsteil.

14. Informationsverarbeitungsvorrichtung umfassend:
einen Prozessor, der konfiguriert ist, ein Programm auszuführen;
einen Speicher, der konfiguriert ist, das Programm zu speichern;
einen Verschlüsselungsverarbeitungsteil (703), der konfiguriert ist, Konfigurationsbits von Daten, die einer Datenverarbeitung zu unterziehen sind, in mehrere Zeilen zu zerlegen und einzugeben und wiederholt eine Datenumwandlungsverarbeitung auszuführen, bei der eine Rundungsfunktion auf jede Zeile von Daten als eine Rundungsberechnung angewendet wird; und
einen Schlüsselplanungsteil, der konfiguriert ist, Rundungsschlüssel an eine Rundungsberechnungsausführungseinheit in dem Verschlüsselungsverarbeitungsteil auszugeben;
wobei der Schlüsselplanungsteil ein Schlüsselplanungsteil des Typs Ersatz ist, der konfiguriert ist, mehrere Rundungsschlüssel durch Teilen eines vorab gespeicherten geheimen Schlüssels in mehrere Teile ohne Verwendung einer nicht-linearen Funktion zu erzeugen;
und wobei die mehreren Rundungsschlüssel, die aus jeweiligen der mehreren geteilten Teile erzeugt wurden, oder mehrere Rundungsschlüssel, die jeweils aus einer jeweiligen Aneinanderreihung von zwei der mehreren geteilten Teile erzeugt wurden, an eine Rundungsberechnungsausführungseinheit, die in dem Verschlüsselungsverarbeitungsteil sequentiell ausgeführt wird, derart ausgegeben werden, dass keine gleichbleibende Sequenz wiederholt wird, wobei die ausgegebenen mehreren erzeugten Rundungsschlüssel eine Gruppe bilden;
wobei der Schlüsselplanungsteil konfiguriert ist, mehrere Gruppen durch Bereitstellen der ausgegebenen mehreren erzeugten Rundungsschlüssel in einer unterschiedlichen Sequenz in jeder Gruppe auszugeben, oder konfiguriert ist, mehrere Rundungsschlüssel auszugeben, die jeweils aus einer unterschiedlichen jeweiligen Aneinanderreihung von zwei der mehreren geteilten Teile erzeugt werden, wenn Schlüssel durch Aneinanderreihung von geteilten Teilen erzeugt werden;
und wobei der Schlüsselplanungsteil konfiguriert ist, eine Steuerungsverarbeitung der Schlüsselbereitstellungssequenz entsprechend der Rundungsberechnungsausführungseinheit bei Einheiten der festgelegten Gruppen von erzeugen Rundungsschlüsseln durchzuführen.

## Revendications

1. Dispositif de traitement de chiffrement, comprenant :
une partie de traitement de chiffrement (703) configurée pour diviser des bits de configuration de données, destinées à être des données traitées, en une pluralité de lignes, et pour entrer, et pour exécuter de façon répétée un traitement de conversion de données en appliquant une fonction d'arrondi sur chaque ligne de données en tant que calcul d'arrondi ; et
une partie d'ordonnancement de clefs configurée pour émettre des clefs d'arrondi à une unité d'exécution de calcul d'arrondi dans la partie de traitement de chiffrement ;
dans lequel la partie d'ordonnancement de clefs est une partie d'ordonnancement de clefs de type remplacement configurée pour générer une pluralité de clefs d'arrondi, en divisant une clef secrète stockée auparavant en une pluralité de parties sans utiliser de fonction non linéaire ;
et dans lequel la pluralité de clefs d'arrondi générées à partir de parties divisées respectives de ladite pluralité de parties divisées, ou une pluralité de clefs d'arrondi, chacune générée à partir d'une concaténation respective de deux de la pluralité de parties divisées, sont émises à une unité d'exécution de calcul d'arrondi s'exécutant séquentiellement dans la partie de traitement de chiffrement de telle sorte qu'une séquence constante ne soit pas répétée, dans lequel la pluralité émise de clefs d'arrondi générées forment un groupe ;
dans lequel la partie d'ordonnancement de clefs est configurée pour émettre une pluralité de groupes en fournissant la pluralité émise de clefs d'arrondi générées dans une séquence différente dans chaque groupe, ou en envoyant une pluralité de clefs d'arrondi, chacune générée à partir d'une concaténation respective différente de deux de la pluralité de parties divisées, lorsque des clefs sont générées par concaténation de parties divisées ;
et dans lequel la partie d'ordonnancement de clefs est configurée pour réaliser un traitement de commande de la séquence de fourniture de clefs correspondant à l'unité d'exécution de calcul d'arrondi sur des unités des groupes réglés de clefs d'arrondi générées.

2. Dispositif de traitement de chiffrement selon la revendication 1, dans lequel la partie de traitement de chiffrement inclut une unité d'exécution de fonction F configurée pour entrer les données divisées en une pluralité de lignes et inclut un traitement de conversion non linéaire et un traitement de conversion linéaire, et une unité de calcul configurée pour exécuter des calculs en appliquant les clefs d'arrondi par rapport à la sortie de l'unité d'exécution de fonction F.

3. Dispositif de traitement de chiffrement selon la revendication 1, dans lequel la partie d'ordonnancement de clefs divise une clef secrète stockée auparavant en une pluralité de parties, et génère une pluralité de clefs d'arrondi possédant le même nombre de bits que la clef d'arrondi entrée dans l'unité d'exécution de calcul d'arrondi.

4. Dispositif de traitement de chiffrement selon la revendication 1, dans lequel la partie d'ordonnancement de clefs divise une clef secrète stockée auparavant en une pluralité de parties, et génère une pluralité de clefs d'arrondi possédant un nombre plus petit de bits que la clef d'arrondi entrée dans l'unité d'exécution de calcul d'arrondi, et réalise une pluralité de combinaisons de la pluralité de données de configuration de clef d'arrondi, et génère une clef d'arrondi possédant le même nombre de bits que la clef d'arrondi entrée dans l'unité d'exécution de calcul d'arrondi.

5. Dispositif de traitement de chiffrement selon la revendication 1, dans lequel la partie d'ordonnancement de clefs émet une pluralité juxtaposée de clefs d'arrondi qui sont appliquées sur l'unité d'exécution de calcul d'arrondi concernant l'unité d'exécution de calcul d'arrondi s'exécutant séquentiellement dans la partie de traitement de chiffrement.

6. Dispositif de traitement de chiffrement selon la revendication 1, dans lequel la partie d'ordonnancement de clefs inclut au moins un sélecteur configuré pour réaliser un traitement de fourniture de sélection de clefs correspondant à l'unité d'exécution de calcul d'arrondi.

7. Dispositif de traitement de chiffrement selon la revendication 1, dans lequel la partie d'ordonnancement de clefs inclut des sélecteurs individuels correspondant à chacun des groupes.

8. Dispositif de traitement de chiffrement selon la revendication 1, dans lequel la partie de traitement de chiffrement exécute un traitement de chiffrement pour convertir un texte clair, en tant que données d'entrée, en texte chiffré, et exécute un traitement de déchiffrement pour convertir un texte chiffré, en tant que données d'entrée, en texte clair.

9. Procédé de traitement de chiffrement destiné à être exécuté dans un dispositif de traitement de chiffrement, le procédé de traitement de chiffrement comprenant :
une étape de traitement de chiffrement, dans laquelle une partie de traitement de chiffrement (703) est configurée pour diviser des bits de configuration de données, destinées à être des données traitées, en une pluralité de lignes, et entrer, et pour exécuter de façon répétée un traitement de conversion de données appliquant une fonction d'arrondi sur chaque ligne de données en tant que calcul d'arrondi ; et
une étape d'ordonnancement de clefs, dans laquelle une partie d'ordonnancement de clefs est configurée pour émettre des clefs d'arrondi à une unité d'exécution de calcul d'arrondi dans la partie de traitement de chiffrement ;
dans lequel la partie d'ordonnancement de clefs est une partie d'ordonnancement de clefs de type remplacement configurée pour générer une pluralité de clefs d'arrondi en divisant une clef secrète stockée auparavant en une pluralité de parties sans utiliser de fonction non linéaire ;
et dans lequel la pluralité de clefs d'arrondi générées à partir de parties divisées respectives de ladite pluralité de parties divisées, ou une pluralité de clefs d'arrondi, chacune générée à partir de concaténations respectives de deux de la pluralité de parties divisées, sont émises à une unité d'exécution de calcul de clef d'arrondi s'exécutant séquentiellement dans la partie de traitement de chiffrement à un réglage tel qu'une séquence constante ne soit pas répétée, dans lequel la pluralité émise de clefs d'arrondi générées forment un groupe ;
dans lequel une pluralité de groupes est émise en fournissant la pluralité émise de clefs d'arrondi générées dans une séquence différente dans chaque groupe, ou émise en fournissant une pluralité de clefs d'arrondi, chacune générée à partir d'une concaténation respective différente de deux de la pluralité de parties divisées, lorsque des clefs sont générées par concaténation de parties divisées ;
et dans lequel l'étape d'ordonnancement de clefs comprend la réalisation d'un traitement de commande de la séquence de fourniture de clefs correspondant à l'unité d'exécution de calcul d'arrondi sur des unités des groupes réglés de clefs d'arrondi générées.

10. Programme pour exécuter un traitement de chiffrement dans un dispositif de traitement de chiffrement selon le procédé de la revendication 9.

11. Dispositif de traitement de chiffrement selon la revendication 1, possédant une structure de Feistel généralisée comprenant la partie de traitement de chiffrement et la partie d'ordonnancement de clefs.

12. Dispositif de traitement de chiffrement selon la revendication 1, possédant une structure de Feistel généralisée avec 4 lignes de données comprenant la partie de traitement de chiffrement et la partie d'ordonnancement de clefs.

13. Dispositif de traitement de chiffrement selon la revendication 1, possédant une structure de Feistel généralisée de Type 2 comprenant la partie de traitement de chiffrement et la partie d'ordonnancement de clefs.

14. Dispositif de traitement d'informations, comprenant :
un processeur configuré pour exécuter un programme ;
une mémoire configurée pour stocker le programme ;
une partie de traitement de chiffrement (703) configurée pour diviser des bits de configuration de données, destinées à être des données traitées, en une pluralité de lignes, et pour entrer, et pour exécuter de façon répétée un traitement de conversion de données appliquant une fonction d'arrondi sur chaque ligne de données en tant que calcul d'arrondi ; et
une partie d'ordonnancement de clefs configurée pour émettre des clefs d'arrondi à une unité d'exécution de calcul d'arrondi dans la partie de traitement de chiffrement ;
dans lequel la partie d'ordonnancement de clefs est une partie d'ordonnancement de clefs de type remplacement configurée pour générer une pluralité de clefs d'arrondi, en divisant une clef secrète stockée auparavant en une pluralité de parties sans utiliser de fonction non linéaire ;
et dans lequel la pluralité de clefs d'arrondi générées à partir de parties divisées respectives de ladite pluralité de parties divisées, ou une pluralité de clefs d'arrondi, chacune générée à partir d'une concaténation respective de deux de la pluralité de parties divisées, sont émises à une unité d'exécution de calcul d'arrondi s'exécutant séquentiellement dans la partie de traitement de chiffrement de telle sorte qu'une séquence constante ne soit pas répétée, dans lequel la pluralité émise de clefs d'arrondi générées forment un groupe ;
dans lequel la partie d'ordonnancement de clefs est configurée pour émettre une pluralité de groupes en fournissant la pluralité émise de clefs d'arrondi générées dans une séquence différente dans chaque groupe, ou configurée pour émettre une pluralité de clefs d'arrondi, chacune générée à partir d'une concaténation respective différente de deux de la pluralité de parties divisées, lorsque des clefs sont générées par concaténation de parties divisées ;
et dans lequel la partie d'ordonnancement de clefs est configurée pour réaliser un traitement de commande de la séquence de fourniture de clefs correspondant à l'unité d'exécution de calcul d'arrondi sur des unités des groupes réglés de clefs d'arrondi générées.
